# EUROPEAN PATENT APPLICATION

(11) **EP 1 811 517 A1**
(43) Date of publication of application: **25.07.2007**
(21) Application number: 05805911.4
(22) Date of filing: 09.11.2005
(51) Int. Cl.: G11B 7/24

(54) **OPTICAL RECORDING MEDIUM AND METHOD FOR PRODUCING SAME**

(30) Priority: 11.11.2004 JP 2004327999
(71) Applicant: Mitsubishi Kagaku Media Co., Ltd., Tokyo 108-0014 (JP)
(72) Inventor: TAMAKI, Atsushi, Mitsubishi Chem. Group Sc. Techn., Yokohama-shi, Kanagawa 2270033 (JP); ESAKI, Satoshi Mitsubishi Chemical Group Sc.Techn., Yokohama-shi, Kanagawa 2270033 (JP); KURIWADA, Takeshi Mitsubishi Kagaku Media Co. Ltd., Tokyo 1080014 (JP)
(74) Representative: ter Meer, Nicolaus
(86) International application number: PCT/JP2005/020558
(87) International publication number: WO 2006/051828

(57) **Abstract**

It is to obtain an optical recording medium having sufficient stainproof properties and adhesion in a simple and industrially advantageous process.

On an optical recording medium comprising a substrate, and a recording and retrieving layer formed on the substrate, a light transmitting layer to be formed on the recording and retrieving layer, formed by curing a composition containing silica particles and an oligomer having a urethane bond and capable of being cured by irradiation with radiation, and a stainproof layer to be formed on the light transmitting layer, containing an alkoxysilane compound containing a fluorine atom and/or a hydrolysate of the alkoxysilane compound, are provided.

## Description

### TECHNICAL FIELD

The present invention relates to an optical recording medium and its production process.

### BACKGROUND ART

In an optical recording medium such as next generation DVD employing a blue laser for reading, usually a layer for protection (hereinafter suitably referred to as "protective layer") is formed on a recording and retrieving layer so as to protect the recording and retrieving layer which performs a recording function. Such a protective layer is required to have such properties as a low degree of shrinkage on curing and high hardness and in addition, it is required to have stainproof properties to prevent the surface of an optical recording medium from being stained. In order to meet such requirements, heretofore, various developments have been conducted regarding technique to form an appropriate protective layer on the surface of an optical recording medium.

For example, Patent Document 1 discloses a technique of forming on the surface of an optical recording medium a light transmitting layer containing a urethane acrylate as the main component, a top layer containing an active energy ray-curable compound which may contain dispersed inorganic component particles as the main component and a stainproof layer formed by a light-curable resin containing a fluorine compound, to make the optical recording medium have stainproof properties.

Further, Patent Document 2 proposes a composition having a low degree of shrinkage and a high hardness, employing silica particles and an oligomer having a urethane bond, and it discloses that such a composition may be employed for a protective layer of an optical recording medium.
Patent Document 1: JP-A-2004-83877
Patent Document 2: WO2004/041888

### DISCLOSURE OF THE INVENTION

### PROBLEMS THAT THE INVENTION IS TO SOLVE

However, in the technique as disclosed in Patent Document 1, three layers are formed on the surface of the optical recording medium, thus the cost tends to be high, and the production process tends to be poor in producability and practicability. Further, according to studies by the present inventors, it was found that when the top layer is to be employed as a thick anchor layer, the anchor layer may have cracks or the optical recording medium may have deformations such as warp (spring) resulting from shrinkage on curing. Further, it was further found that adhesion between the top layer and the stainproof layer tends to be poor.

Further, by the technique as disclosed in Patent Document 2, it is difficult to increase stainproof properties of the optical recording medium.

Under these circumstances, the present invention has been made to solve the above problems, and it is an object of the present invention to provide an optical recording medium having sufficient stainproof properties and adhesion imparted by a simple and industrially advantageous method, and its production process.

### MEANS OF SOLVING THE PROBLEMS

The present inventors have conducted extensive studies to achieve the above object and as a result, found that an optical recording medium having sufficient stainproof properties and adhesion between a light transmitting layer and a stainproof layer imparted by a simple and industrially advantageous method can be provided by forming on an optical recording medium having a substrate and a recording and retrieving layer, a light transmitting layer formed by curing a composition containing silica particles and an oligomer having a urethane bond and capable of being cured by irradiation with radiation, and a stainproof layer containing an alkoxysilane compound containing a fluorine atom and/or a hydrolysate of the alkoxysilane compound. The present invention has been accomplished on the basis of this discovery.

Namely, the present invention provides the following:
(1) An optical recording medium, which comprises a substrate, a recording and retrieving layer formed on the substrate, a light transmitting layer formed by curing the following component A, formed on the recording and retrieving layer, and a stainproof layer containing the following component B, formed on the light transmitting layer:
   component A: a composition containing silica particles and an oligomer having a urethane bond, capable of being cured by irradiation with radiation,
   component B: an alkoxysilane compound containing a fluorine atom and/or a hydrolysate of the alkoxysilane compound.
(2) The optical recording medium according to the above (1), wherein the silica particles contained in the component A are colloidal silica, or silica particles of a hydrolysate of an oligomer of an alkoxysilane.
(3) The optical recording medium according to the above (1) or (2), wherein the silica particles contained in the component A have a number-average particle size of at least 0.5 nm and at most 50 nm.
(4) The optical recording medium according to any one of the above (1) to (3), wherein the silica particles contained in the component A are surface treated by a silane coupling agent.
(5) The optical recording medium according to any one of the above (1) to (4), wherein the alkoxysilane compound containing a fluorine atom contained in the component B is a silane coupling agent containing a fluoroalkyl group or a fluoroaryl group.
(6) A process for producing the optical recording medium as defined in any one of the above (1) to (5), which comprises a step of curing the component A on the recording and retrieving layer to form the light transmitting layer, and a step of applying a composition containing the component B and a solvent and having a solid component in an amount of at least 0.01 wt.% and at most 1 wt.% to the light transmitting layer and drying the composition to form the stainproof layer.
(7) The process for producing the optical recording medium according to the above (6), wherein in the step of forming the light transmitting layer, the silica particles are prepared in a liquid medium containing a solvent, the oligomer having a urethane bond is dissolved in the liquid medium, and the solvent in the liquid medium is removed to prepare the component A.
(8) The process for producing the optical recording medium according to the above (6) or (7), wherein the solid component includes the alkoxysilane compound containing a fluorine atom and/or the hydrolysate of the alkoxysilane.
(9) The process for producing the optical recording medium according to any one of the above (6) to (8), wherein the solvent is a halogen organic solvent.

### EFFECTS OF THE INVENTION

According to the present invention, sufficient stainproof properties and adhesion can be imparted to an optical recording medium by a simple and industrially advantageous method.

Further, according to the process for producing an optical recording medium of the present invention, an optical recording medium having sufficient stainproof properties and adhesion can be securely produced by a simple and industrially advantageous method.

### BEST MODE FOR CARRYING OUT THE INVENTION

Now, the embodiments of the present invention will be explained below. However, the present invention is by no means restricted to the following examples and the like, and optional modifications are possible within a range not to depart from the scope of the present invention.

The optical recording medium of the present invention comprises a substrate, a recording and retrieving layer, a light transmitting layer and a stainproof layer. The light transmitting layer is formed by curing the component A, i.e. a composition containing silica particles (preferably silica particles made of a hydrolysate of an oligomer of an alkoxysilane) and an oligomer having a urethane bond, and capable of being cured by irradiation with radiation (hereinafter suitably referred to as "composition A"). Further, the stainproof layer is formed as one containing the component B, i.e. an alkoxysilane compound containing a fluorine atom and/or a hydrolysate of the alkoxysilane compound.

### (1) Substrate

The substrate is not limited, and a known substrate of an optical recording medium may optionally be employed.

A substrate of an optical information recording medium is formed usually as a plate having a convex-concave grooves (tracking grooves) to be used for recording and retrieving optical information formed on one main surface. Its shape is optional but it is usually formed into a disk shape.

Further, the material of the substrate is not particularly limited so long as it is a light transmitting material. Namely, the substrate can be formed by an optional material through which a light having a wavelength to be used for recording or retrieving optical information can be transmitted. Specific examples of the material include thermoplastic resins such as a polycarbonate resin, a polymethacrylate resin and a polyolefin resin and glass. Among them, a polycarbonate resin is most widely used for e.g. CD-ROM, and is available at a low cost and is thereby most preferred. The materials of the substrate may be used alone or two or more of them may be used in an optional combination with an optional proportion.

Further, the dimensions of the substrate are not limited and are optional. However, the thickness of the substrate is usually at least 0.1 mm, preferably at least 0.3 mm, more preferably at least 0.5 mm, and usually at most 20 mm, preferably at most 15 mm, more preferably at most 3 mm. Particularly, a substrate having a thickness at level of 1.2±0.2 mm is often used. Further, the outer diameter of the substrate is usually approx. 120 mm.

The method for producing the substrate is not limited and is optional. The substrate may be produced, for example, by injection molding of a light transmitting resin employing a stamper.

### (2) Recording and retrieving layer

The recording and retrieving layer is a layer formed on a substrate so as to have a function of recording and retrieving or retrieving information signals. The specific structure of the recording and retrieving layer is not limited, and a known structure as a recording and retrieving layer of an optical recording medium may optionally be employed.

The recording and retrieving layer may have a monolayer structure consisting of only one layer or may have a laminated structure consisting of a plurality of layers. A layer structure according to the purpose may be employed, depending upon a case where the optical recording medium is a read-only medium (ROM medium), a case where it is a write once medium on which recording is possible only once, and a case where it is a rewritable medium on which recording and erasing are repeatedly carried out.

For example, in a read-only optical recording medium, the recording and retrieving layer is usually constituted as a layer having a monolayer structure consisting of only a reflective layer containing a metal. Further, in such a case, the recording and retrieving layer may be formed, for example, by forming the reflective layer on the substrate by means of e.g. a sputtering method.

Further, in a write once optical recording medium, the recording and retrieving layer is usually constituted as a layer having a laminated structure prepared by forming a reflective layer and a recording layer containing an organic dye on a substrate in this order. Further, in such a case, the recording and retrieving layer may be formed, for example, by forming the reflective layer by means of e.g. a sputtering method, and forming as the recording layer a film of an organic dye on the reflective layer by means of e.g. a spin coating method.

Further, as another specific example of the recording and retrieving layer in a write once medium, a layer having a laminated structure having a reflective layer, a dielectric layer, a recording layer and a dielectric layer formed on a substrate in this order may be mentioned. In such a case, usually the dielectric layers and the recording layer contain an inorganic material. Further, such a recording and retrieving layer in the write once medium may be formed usually by forming the reflective layer, the dielectric layer, the recording layer and the dielectric layer by means of a sputtering method.

Further, in a rewritable optical recording medium, the recording and retrieving layer is usually constituted as a layer having a laminated structure having a reflective layer, a dielectric layer, a recording layer and a dielectric layer formed on a substrate in this order. Such a recording and retrieving layer in the rewritable medium may be formed usually by forming the reflective layer, the dielectric layer, the recording layer and the dielectric layer by means of a sputtering method.

Further, as another specific example of the recording and retrieving layer in the rewritable optical recording medium, the same recording and retrieving layer as one used for a magneto-optical recording medium may be mentioned. In such a case, the recording and retrieving layer is formed by a reflective layer, a recording layer and a dielectric layer.

Further, in the optical recording medium, a recording and retrieving region to be used for practical recording and retrieving is usually set. This recording and retrieving region is provided usually at a region having an inner diameter larger than the inner diameter of the recording and retrieving layer and having an outer diameter smaller than the outer diameter of the recording and retrieving layer. At this recording and retrieving region, the above tracking grooves are formed on the substrate.

Now, the layers constituting the recording and retrieving layer will be explained in detail below.

### (2-1) Reflective layer

The reflective layer is a layer on which a light to be employed for recording and retrieving is reflected in the optical recording medium. Its specific structure is not limited, and a known reflective layer of an optical recording medium may optionally be employed.

As a material to be used for the reflective layer, an optional material may be employed so long as a light to be employed for recording and retrieving is reflected, but usually a substance having a high reflectivity is preferred. Further, the materials of the reflective layer may be used alone or two or more of them may be used in an optional combination with an optional proportion.

As examples of a preferred material of the reflective layer, metals such as Au, Ag and Al may be mentioned, with which heat dispersion effects are expected.

Further, in order to control the thermal conductivity of the reflective layer itself or to improve corrosion resistance, a metal such as Ta, Ti, Cr, Mo, Mg, V, Nb, Zr or Si may be used in combination. The amount of a metal used in combination is usually at least 0.01 mol.% and at most 20 mol.% as a proportion in the reflective layer.

Particularly, an aluminum alloy containing Ta and/or Ti in an amount of at most 15 mol.%, particularly an aluminum alloy of Al_{α}Ta_{(1-α)} (wherein 0≦α≦0.15) is excellent in corrosion resistance and is particularly preferred with a view to improving reliability of the optical recording medium.

Further, a Ag alloy containing Ag and at least one of Mg, Ti, Au, Cu, Pd, Pt, Zn, Cr, Si, Ge and rare earth elements in an amount of at least 0.01 mol.% and at most 10 mol.% has a high refractivity and a high thermal conductivity and is excellent also in heat resistance and is thereby preferred.

Further, the thickness of the reflective layer is not limited and is optional, and it is usually at least 40 nm, preferably at least 50 nm and usually at most 300 nm, preferably at most 200 nm. If the reflective layer is excessively thick, the shape of the tracking grooves formed on the substrate may change, and further, film formation will take long, and the material cost tends to increase. On the other hand, if the reflective layer is excessively thin, not only light transmission will take place and the layer may not function as a reflective layer but also a part of the reflective layer is likely to be influenced by an island structure formed at the initial stage of the film growth, whereby the reflectivity or the thermal conductivity may decrease.

### (2-2) Dielectric layer

The dielectric layer is a layer to prevent evaporation or deformation accompanying a phase change of the recording layer, and to control thermal diffusion at the time of the phase change. Its specific structure is not limited, and a known dielectric layer of an optical recording medium may optionally be employed.

As a material to be used for the dielectric layer, an optional material may be employed so long as it is a dielectric, and usually it is preferably selected considering refractivity, thermal conductivity, chemical stability, mechanical strength, adhesion, etc. Usually, it is possible to employ a dielectric material having high transparency and having a high melting point, such as an oxide, a sulfide, a nitride or a carbide of a metal or a semiconductor, or a fluoride of e.g. Ca, Mg or Li. Further, the materials of the dielectric layer may be used alone or two or more of them may be used in an optional combination with an optional proportion. Further, the above materials such as an oxide, a sulfide, a nitride, a carbide and a fluoride are not necessarily required to have a stoichiometrical composition, and it is effective to control their compositions or to mix them so as to control the refractivity, etc.

Specifically, the material of the dielectric layer may, for example, be an oxide of a metal such as Sc, Y, Ce, La, Ti, Zr, Hf, V, Nb, Ta, Zn, Al, Cr, In, Si, Ge, Sn, Sb or Te; a nitride of a metal such as Ti, Zr, Hf, V, Nb, Ta, Cr, Mo, W, Zn, B, A1, Ga, In, Si, Ge, Sn, Sb or Pb; a carbide of a metal such as Ti, Zr, Hf, V, Nb, Ta, Cr, Mo, W, Zn, B, A1, Ga, In or Si or a mixture thereof. Further, a sulfide of a metal such as Zn, Y, Cd, Ga, In, Si, Ge, Sn, Pb, Sb or Bi; a selenide or telluride; a fluoride of e.g. Mg or Ca, or a mixture thereof, may also be mentioned.

Among them, considering repeated recording characteristics of the optical recording medium, it is preferred to form the dielectric layer by a mixture of dielectrics. For example, a dielectric layer may be formed by a mixture of a calcogenide of e.g. ZnS or a rare earth sulfide with a heat resistant compound such as an oxide, a nitride, a carbide or a fluoride. Further, a mixture of heat resistant compounds containing ZnS as the main component or a mixture of heat resistant compounds containing a rare earth oxysulfide particularly Y₂O₂S as the main component, is one example of a preferred dielectric layer composition. More specifically, ZnS-SiO₂, SiN, SiO₂, TiO₂, CrN, TaS₂ or Y₂O₂S may, for example, be mentioned. Among these materials, ZnS-SiO₂ is widely utilized in view of a high film formation rate, a small film stress, a small volume change by a temperature change and excellent weather resistance.

Further, the thickness of the dielectric layer is not limited and is optional, and it is usually at least 1 nm, and usually at most 500 nm. When its thickness is at least 1 nm, a sufficient effect of preventing deformation of the substrate or the recording layer will be secured, and the layer can sufficiently play a role as a dielectric layer. Further, when the thickness is at most 500 nm, while the layer can sufficiently play a role as a dielectric layer, cracks can be prevented, which are due to a remarkable internal stress of the dielectric layer itself and a remarkable change of the elastic characteristics with the substrate.

### (2-3) Recording layer

The recording layer is a layer on which information is recorded by its phase change. Its specific structure is not limited, and a known recording layer of an optical recording medium may optionally be employed.

As the material to be used for the recording layer, known materials may optionally be employed, and the materials may be used alone or two or more of them may be used in an optional combination with an optional proportion.

Specifically, the material may be a compound having a composition of e.g. GeSbTe, InSbTe, AgSbTe or AgInSbTe. Among them, a thin film containing as the main component a {(Sb₂Te₃)₍₁₋ₓ₎(GeTe)ₓ}_{(1-y)}Sb_{y} alloy (wherein 0.2≦x≦0.9 and 0≦y≦0.1) or a {SbₓTe₍₁₋ₓ₎}_{y}M_{(1-y)} alloy (wherein 0.6≦x≦0.9, 0.7≦y≦1, and M is at least one atom selected from Ge, Ag, In, Ga, Zn, Sn, Si, Cu, Au, Pd, Pt, Pb, Cr, Co, O, S, Se, V, Nb and Ta) is preferred since it is stable in either crystallized or amorphous state and is capable of undergoing phase change (phase transition) between these states at a high speed. Further, such a material has an advantage such that segregation hardly occurs when repeated overwriting is carried out, and is the most practical material.

Further, as a material of the recording layer, an organic dye may be used instead of or in combination with the above inorganic compound. Specifically, the organic dye may, for example, be a macrocyclic azaannulene dye (such as phthalocyanine dye, naphthalocyanine dye or porphyrin dye), a pyromethene dye, a polymethine dye (such as cyanine dye, merocyanine dye or squarylium dye), an anthraquinone dye, an azulenium dye, a metal complex of azo dyes or a metal complex of indoaniline dyes. Among these organic dyes, a metal complex of azo dyes is excellent in recording sensitivity and is excellent also in durability and light resistance and is thereby preferred.

Further, the organic dye to be used for the recording layer is preferably a dye compound having a maximum absorption wavelength λmax in a visible light to near infrared region at a wavelength of about from 350 to about 900 nm and suitable for recording by means of a blue to near microwave laser. More preferred is a dye suitable for recording by means of a near infrared laser having a wavelength at a level of from 770 to 830 nm usually used for CD-R (typically 780 nm, 830 nm) a red laser having a wavelength at a level of from 620 to 690 nm (typically, 635 nm, 650 nm, 680 nm, etc.) or a so-called blue laser having a wavelength of 410 nm, 515 nm, etc.

Further, the thickness of the recording layer is not limited and is optional, but the lower limit is usually at least 5 nm, preferably at least 10 nm. Within such a range, a sufficient optical contrast between an amorphous state and a crystallized state of the recording layer will be obtained. Further, the upper limit of the thickness of the recording layer is usually at most 30 nm, preferably at most 20 nm. Within such a range, an increase in the optical contrast due to reflection of a light transmitted through the recording layer on the reflective layer will be obtained, and the heat capacity can be controlled to be a proper value, whereby high speed recording becomes possible.

Further, when the thickness of the recording layer is at least 10 nm and at most 20 nm, both higher speed recording and higher optical contrast can be achieved at the same time. Further, when the thickness of the recording layer is within this range, it is possible to reduce the volume change due to a phase change and to minimize the influence of the repeated volume change due to repetitive overwriting, over the recording layer itself and over other layers on and below the recording layer. Further, accumulation of irreversible microscopic deformation of the recording layer can be suppressed, whereby the noise will be reduced, and the repetitive overwriting durability will be improved.

### (2-4) Others

The layers constituting the recording and retrieving layer such as the reflective layer, the recording layer and the dielectric layer may be formed by an optional method, and they are formed usually by e.g. a sputtering method. In the sputtering method, it is preferred to carry out layer formation in an in-line apparatus having a recording layer target, a dielectric layer target, if necessary a reflective layer material target provided in the same vacuum chamber, with a view to preventing oxidation or contamination among the layers. Such is excellent also in view of productivity. Further, in a case of forming layers by e.g. an organic dye, the layer formation may be carried out e.g. by a spin coating method.

On the optical recording medium of the present invention, the light transmitting layer and the stainproof layer are formed on a medium having the above-described substrate and recording and retrieving layer, and among such recording media, a next generation high density optical recording medium employing a blue laser is preferred. Accordingly, although the wavelength of a light to be employed for recording and retrieving on the optical recording medium of the present invention is not limited and is optional, it is preferred to form the medium as an optical recording medium employing a light having a wavelength of usually at least 350 nm, preferably at least 380 nm, and usually at most 800 nm, preferably at most 450 nm.

### (3) Light transmitting layer

The light transmitting layer is a layer to be formed on the recording and retrieving layer for the purpose of protecting the recording and retrieving layer or for another purpose. Further, in the optical recording medium of the present invention, the light transmitting layer is formed by curing the composition A.

The composition A is a composition containing silica particles (hereinafter suitably referred to as "fine silica" in some cases) and an oligomer having a urethane bond (hereinafter suitably referred to as "urethane oligomer" in some case), and capable of being cured by irradiation with radiation. Further, in the composition A, another inorganic component (hereinafter suitably referred to as "combined inorganic component" in some cases) may suitably be incorporated.

### (3-1) Fine silica particles

The particle size of the fine silica particles contained in the composition A is optional within a range not to significantly impair the effects of the present invention. However, the lower limit of the number-average particle size of the fine silica particles of the composition A is usually at least 0.5 nm, preferably at least 1 nm. If the number-average particle size is too small, aggregation properties of the fine silica particles which are ultrafine particles tend to extremely increase, whereby when the composition A is cured, the cured composition A i.e. the light transmitting layer may have extremely decreased transparency or mechanical strength, or characteristics by the quantum effect may not be remarkable. Further, the upper limit of the number-average particle size of the fine silica particles of the composition A is usually at most 50 nm, preferably at most 40 nm, more preferably at most 30 nm, furthermore preferably at most 15 nm, particularly preferably at most 12 nm.

Further, in the composition A, the proportion of the fine silica particles having predetermined particle sizes is preferably within a predetermined range. Specifically, among the fine silica particles of the composition A, the proportion of fine silica particles having particle sizes usually larger than 30 nm, preferably larger than 15 nm, is desirably usually at most 1 wt.%, preferably at most 0.5 wt.% based on the composition A. Otherwise, the proportion of the fine silica particles having particles sizes within the above range is desirably usually at most 1 vol.%, preferably at most 0.5 vol.% based on the light transmitting layer. If the composition A contains the fine silica particles having particle sizes within the above predetermined range in a large amount, light scattering tends to be significant, whereby the transmittance tends to decrease.

To determine the above number-average particle size, values as measured in an image observed by a transmission electron microscope (TEM) are employed. Namely, the diameter of a circle having the same area as that of an observed fine silica particle is defined as the particle size of the silica particle. Employing particle sizes thus determined, the above number-average particle size is calculated by means of known statistical analysis of image data. On this occasion, the number of the ultrafine particle images to be used for the statistical analysis (statistic analysis data number) is preferably as many as possible. For example, the number of randomly selected fine silica particle images is usually at least 50 pieces, preferably at least 80 pieces, more preferably at least 100 pieces in view of reproducibility. Further, the vol.% of the fine silica particles in the cured composition A is calculated as the volume of spheres having the above-measured particle sizes as diameters.

Conventional silica particles usually provide a broad particle size distribution, and include particles having particle sizes larger than 50 nm for example. Accordingly, their transparency tends to be poor in many cases, and the silica particles are likely to sediment. A product from which silica particles having large particles sizes are separated (a so-called cut product) is known, but such silica particles tend to undergo secondary aggregation, and their transparency are impaired in most cases.

On the other hand, the composition A contains fine silica particles.

Such fine silica particles are not particularly limited, and colloidal silica or silica particles of a hydrolysate of an oligomer of an alkoxysilane may, for example, be mentioned.

First, colloidal silica will be explained below. Collidal silica is usually one in such a state that ultrafine particles of silicic anhydride are dispersed in water or an organic solvent. The primary particle size of the colloidal silica is usually at least 1 nm, preferably at least 5 nm, and usually at most 200 nm, preferably at most 80 nm. If the primary particle size of the colloidal silica is smaller than the lower limit of the above range, the silica component tend to gelate during preservation or in the production process, and if the primary particle size is larger than the upper limit, transparency of the light transmitting layer tends to decrease.

Further, as specific examples of a dispersion medium to be used to disperse the ultrafine particles of silicic anhydride, known dispersion media may optionally be employed, and the dispersion medium may, for example, be water; an alcohol solvent such as methanol, ethanol, 2-propanol, n-propanol, 2-butanol or n-butanol; a polyhydric alcohol solvent such as ethylene glycol; a polyhydric alcohol derivative such as ethyl cellosolve or butyl cellosolve; a ketone solvent such as methyl ethyl ketone, methyl isobutyl ketone or diacetone alcohol; or a monomer such as 2-hydroxyethyl acrylate, 2-hydroxypropyl acrylate or tetrahydrofurfuryl acrylate. Among them, an alcohol solvent having three or less carbon atoms is particularly preferred. The above dispersion media may be used alone or two or more of them may be used in an optional combination with an optional proportion. Further, the colloidal silica may be produced by a known method, or may be available as a commercial product.

Now, the silica particles of a hydrolysate of an oligomer of an alkoxysilane will be described below. According to a specific preparation method of hydrolysis of an oligomer of an alkoxysilane, fine silica particles having very small particle sizes will stably be obtained, and such fine silica particles has such characteristics that they are hardly aggregated. Accordingly, when the silica particles obtained by this preparation method are employed as the fine silica particles of the composition A, high transparency will be achieved even when the composition A is cured.

The hydrolysate means a product obtained by reactions including at least a hydrolytic reaction, and the reaction may involve dehydration condensation for example. Further, the hydrolytic reaction includes dealcoholization.

The alkoxysilane is a compound having an alkoxy group bonded to a silicon atom, and this forms an alkoxysilane multimer (oligomer) by a hydrolytic reaction or a dehydration condensation reaction (or dealcoholization condensation). The type of the alkoxysilane to be employed for the material of the fine silica particles of the composition A is not limited and is optional, but the number of carbon atoms in the alkyl group of the alkoxysilane is preferably not too many, and it is usually at least 1, and usually at most 5, preferably at most 3, in order that the alkoxysilane oligomer has compatibility with water or a solvent as described hereinafter. Specifically, the alkoxysilane to be used as the material of the fine silica particles of the composition A may, for example, be tetramethoxysilane or tetraethoxysilane.

Further, the fine silica particles of the composition A are obtained usually from an oligomer of the above alkoxysilane as a starting material. The reasons why the alkoxysilane monomer is not used as a starting material are as follows. Namely, it tends to be difficult to control the particle size of the alkoxysilane monomer, and the distribution of the particle sizes tends to be broad, and the particle sizes are hardly uniform, whereby it may be impossible to make the composition A transparent. Further, some of alkoxysilane monomers have toxicity, and such is unfavorable in view of safety and sanitation.

As the oligomer of the alkoxysilane, an alkoxysilane oligomer produced by an optional known production method may be employed, and it can be produced, for example, by a method as disclosed in JP-A-7-48454.

Further, the alkoxysilane oligomer to be employed as the material of the fine silica particles of the composition A preferably has compatibility with a solvent or water to be used at the time of hydrolysis. This is to prevent phase separation in a hydrolysis step.

The molecular weight of the alkoxysilane oligomer to be employed as the material of the fine silica particles is not limited and is optional within a range not to significantly impair the effects of the present invention. However, it is usually at least 100, preferably at least 200, more preferably at least 300, and usually at most 1,500, preferably at most 1,200, more preferably at most 1,000. If the molecular weight is out of this range, white turbidity or gelation is likely to occur when the fine silica particles are formed.

The alkoxysilane oligomers as the material may be used alone or two or more of them may be used in an optional combination with an optional proportion.

The method of hydrolysis of the alkoxysilane oligomer is not limited and is optional and for example, the hydrolysis can be carried out by adding a certain amount of water to the alkoxysilane oligomer in a specific solvent and reacting a catalyst. The fine silica particles of the composition A can be obtained by such a hydrolytic reaction.

The solvent to be employed for the hydrolysis is optional so long as hydrolysis of the alkoxysilane oligomer is possible, and it is possible to use one or at least two in combination among alcohols, glycol derivatives, hydrocarbons, esters, ketones and ethers. Among them, alcohols and ketones are particularly preferred.

Specific examples of the alcohols include methanol, ethanol, isopropyl alcohol, n-butyl alcohol, isobutyl alcohol, ocatanol, n-propyl alcohol and acetylacetone alcohol.

Further, specific examples of the ketones include acetone, methyl ethyl ketone and methyl isobutyl ketone.

Further, in order that the fine silica particles which are hydrophilic are stably present, the number of carbon atoms in such an alcohol or ketone is preferably small. Particularly preferred is methanol, ethanol or acetone. Particularly, acetone, which has a low boiling point, has such an advantage that the time required for a step of removing the solvent is relatively short.

The amount of water to be used for the hydrolytic reaction of the alkoxysilane oligomer is not limited and is optional so long as hydrolysis is possible. However, it is preferred to use water in an amount of usually at least 0.05 time by mol, preferably at least 0.3 time by mol, to the number of mols of the alkoxy groups which the alkoxysilane oligomer has. If the amount of water is too small, the fine silica particles will not grow to have a sufficient size, whereby no desired characteristics of the fine silica particles tend to be obtained. However, the upper limit is usually at most one time. If the amount is too large, the alkoxysilane oligomer tends to form a gel.

Further, the catalyst to be used for the hydrolysis is not limited, and an optional catalyst may be employed so long as the hydrolysis is possible. For example, a metal chelate compound, an organic acid, a metal alkoxide or a boron compound may be employed. Among them, a metal chelate compound or an organic acid is preferred. The catalysts to be used for the hydrolysis may be used alone or two or more of them may be used in an optional combination with an optional proportion.

Specifically, the metal chelate compound to be used as the catalyst may, for example, be aluminum tris(acetylacetonate), titanium tetrakis(acetylacetonate), titanium bis(isopropoxy)bis(acetylacetonate), zirconium tetrakis(acetylacetonate), zirconium bis(butoxy)bis(acetylacetonate) or zirconium bis(isopropoxy)bis(acetylacetonate), and they may be used alone or in combination of two or more of them. Especially, aluminum tris(acetylacetonate) is preferably employed.

Further, specific examples of the organic acid to be used as the catalyst include formic acid, acetic acid, propionic acid and maleic acid, and they may be used alone or in combination of two or more of them. Especially, maleic acid is preferably employed. In a case where maleic acid is employed, such an advantage is obtained that the light transmitting layer obtained by curing the composition A with radiation tends to have favorable hue and is less likely to be yellowish.

The amount of such a catalytic component is not particularly limited within a range where its effect is sufficiently achieved, and it is preferably usually at least 0.1 part by weight, preferably at least 0.5 part by weight per 100 parts by weight of the alkoxysilane oligomer. However, it is usually at most 10 parts by weight, preferably at most 5 parts by weight, since the effect will not longer improve even if a very large amount of the catalyst is used.

The temperature condition when the hydrolysis is carried out is not limited and is optional so long as the hydrolysis proceeds, and the temperature is desirably usually at least 10°C, preferably 30°C, and usually at most 90°C, preferably at most 70°C. If the temperature is lower than the lower limit of this range, the reaction to form the fine silica particles may not sufficiently proceed, and if it is higher than the upper limit, gelation of the oligomer of the alkoxysilane may easily occur.

Further, the hydrolysis time during which the hydrolysis is carried out is not limited, and it is usually from 30 minutes to 1 week.

In the present invention, by use of the fine silica particles of a hydrolysate of an oligomer of an alkoxysilane as the silica particles to be employed for the composition A, such an advantage will be obtained that very small ultrafine particles having a much uniform particle size can be incorporated in the light transmitting layer as compared with silica particles which are commonly employed as a filler component. Further, since the fine silica particles of a hydrolysate of an alkoxysilane oligomer have such characteristics that they hardly aggregate, the fine silica particles can be uniformly dispersed in the composition A, which makes it possible to uniformly disperse the fine silica particles in the light transmitting layer. Accordingly, the radiation transmittance will not be impaired even when a large amount of the fine silica particles are used, and thus the fine silica particles in an amount sufficient to increase the dimensional stability and the mechanical strength of the light transmitting layer and the optical recording medium can be used. By use of the fine silica particles obtained by such a specific production method and a surface treatment of the fine silica particles by means of a silane coupling agent or the like as described hereinafter in combination, and by further employing a urethane oligomer, such an advantage can be obtained that a larger amount of the fine silica particles can be dispersed without aggregation.

Accordingly, a light transmitting layer employing the above fine silica particles has such an advantage that it has excellent characteristics in transparency, dimensional stability, mechanical strength, and adhesion, etc.

### (3-2) Combined inorganic component

In the composition A, in addition to the fine silica particles, another inorganic component (combined inorganic component) may be incorporated. The combined inorganic component is not particularly limited and an optional inorganic substance may be employed within a range not to significantly impair the effects of the present invention. The combined inorganic component may, for example, be a colorless metal or a colorless metal oxide. Specifically, it may, for example, be silver, palladium, alumina, zirconia, aluminum hydroxide, titanium oxide, zinc oxide, silica particles other than the above described fine silica particles, calcium carbonate or a clay mineral powder. Among them, preferred is alumina, zinc oxide, silica particles other than the fine silica particles or titanium oxide. Such combined inorganic components may be used alone or two or more of them may be used in an optional combination with an optional proportion.

The method for producing the combined inorganic component is not limited and an optional method may be employed. However, since the combined inorganic component preferably has a small particle size, it is preferably produced by means of a method capable of reducing the particle size of the particles. Specifically, a method of pulverizing a commercial combined inorganic component product by a pulverizer such as a ball mill; or a method of producing the combined inorganic component by a sol-gel method, may, for example, be mentioned. Among them, preferred is a product produced by a sol-gel method.

The particle size of the combined inorganic component to be incorporated in the composition A is optional so long as the effects of the present invention are not significantly impaired, and usually, as mentioned above, the combined inorganic component is preferably in the form of ultrafine particles having a small particle size. The lower limit of the particle size of the combined inorganic component is usually at least 0.5 nm, preferably at least 1 nm as the number-average particle size. If the number-average particle size is too small, aggregation properties of the ultrafine particles tend to extremely increase, whereby the transparency or the mechanical strength of the light transmitting layer may extremely decrease, or the characteristics by the quantum effect may not be remarkable. The upper limit of the particle size of the combined inorganic component is usually at most 50 nm, preferably at most 40 nm, more preferably 30 nm, furthermore preferably less than 15 nm, particularly preferably at most 12 nm as the number-average particle size.

Further, in the composition A, the proportion of the combined inorganic component having predetermined particle sizes is preferably within a predetermined range, in the same manner as in the case of the fine silica particles. Specifically, among the combined inorganic components of the composition A, the proportion of the combined inorganic component having particle sizes usually larger than 30 nm, preferably larger than 15 nm, is desirably usually at most 1 wt.%, preferably at most 0.5 wt.%, based on the composition A. Otherwise, the proportion of the combined inorganic component having particle sizes within the same range, is desirably usually at most 1 vol.%, preferably at most 0.5 vol.%, based on the light transmitting layer. If the composition A contains the combined inorganic component having particle sizes within the above predetermined range in a large amount, light scattering tends to be significant, whereby the transmittance tends to decrease. The number-average particle size can be determined in the same manner as described above.

### (3-3) Composition of inorganic components

With respect to the total inorganic component content of the fine silica particles and the combined inorganic component (hereinafter suitably referred to as "dispersive inorganic components") in the composition A, they are incorporated in an amount as large as possible so as to increase the dimensional stability and the hardness characteristics of the light transmitting layer. Specifically, it is desirable to incorporate the dispersive inorganic components in an amount of usually at least 5 wt.%, preferably at least 10 wt.% based on the composition A. Otherwise, it is desirable to incorporate the dispersive inorganic components in an amount of usually at least 2 vol.%, preferably at least 5 vol.%, based on the light transmitting layer.

However, the content is preferably not too high so as to maintain high transparency and mechanical strength of the light transmitting layer, and the content of the dispersive inorganic components in the composition A is desirably usually at most 60 wt.%, preferably at most 40 wt.%, furthermore preferably at most 30 wt.%. Otherwise, the content of the dispersive inorganic components in the light transmitting layer is desirably usually at most 30 vol.%, preferably at most 20 vol.%, furthermore preferably at most 15 vol.%.

Further, the proportion of the fine silica particles to the dispersive inorganic components is not particularly limited and is optional, and it is usually at least 50 wt.%, preferably at least 60 wt.%, furthermore preferably at least 70 wt.% and usually at most 100 wt.%.

### (3-4) Surface treatment

It is preferred to protect the surface of the particles of the dispersive inorganic components including the fine silica particles by surface treatment, if necessary.

Usually, the above dispersive inorganic components particularly the fine silica particles in the composition A formed as described above have high polarity, and thereby have compatibility with water, an alcohol, etc., and have no compatibility with a urethane oligomer in some cases. Accordingly, when they are dispersed in a urethane oligomer, they may undergo aggregation or they may cause white turbidity.

Accordingly, the surface of the particles of the dispersive inorganic components is made to be hydrophobic by applying a surface treating agent to the dispersive inorganic components, whereby the dispersive inorganic components are made to have compatibility with a urethane oligomer, so as to prevent aggregation and white turbidity. As the surface treating agent, for example, one having a hydrophilic functional group and a hydrophobic functional group may be employed, and specifically, a dispersing agent, a surfactant or a coupling agent, may, for example, be employed. Further, the surface treating agents may be used alone or two or more of them may be used in an optional combination with an optional proportion.

The method of the surface treatment is not limited so long as the above aggregation and white turbidity can be prevented, and use of the above dispersing agent or surfactant, or a method of modifying the surface by means of e.g. a coupling agent, may, for example, be preferably employed.

As the dispersing agent, known one may optionally be employed, and it may be selected from polymer dispersing agents to be used for dispersions of fine particles such as various inks, coatings and toners for electrophotographes. Such a polymer dispersing agent is suitably selected from acrylic polymer dispersing agent, urethane polymer dispersing agents and the like. Specifically, EFKA, trade name, manufactured by EFKA ADDITIVES, Disperbyk, trade name, manufactured by BYK-Chemie and DISPALON, trade name, manufactured by Kusumoto Chemicals, Ltd. may, for example, be mentioned.

Further, the amount of the dispersing agent to be used is optional, and it is usually at least 10 wt.%, preferably at least 20 wt.%, and usually at most 500 wt.%, preferably at most 300 wt.%, based on the dispersive inorganic components.

Further, as the surfactant, known surfactants may optionally be employed, and it may be selected from polymer or low molecular weight cationic, anionic, nonionic and amphoteric non-aqueous surfactants. Specifically, it may, for example, be a sulfonic acid amid surfactant ("Solsperse 3000", manufactured by Avecia Pigments & Additives), a hydrostearic acid surfactant ("Solsperse 17000", manufactured by Avecia Pigments & Additives), an aliphatic amine surfactant, an ε-caprolactone surfactant ("Solsperse 24000", manufactured by Avecia Pigments & Additives), a 1,2-hydroxystearic acid multimer or tallow diamine oleate ("Duomeen TDO", manufactured by LION AKZO CO., LTD.).

Further, the amount of the surfactant to be used is optional, and it is usually at least 10 wt.%, preferably at least 20 wt.%, and usually at most 500 wt.%, preferably at most 300 wt.%, based on the dispersive inorganic components.

Further, among the dispersive inorganic components, particularly the fine silica particles are preferably subjected to surface treatment by a silane coupling agent. The silane coupling agent is a compound having such a structure that an alkoxy group and an alkyl group having a functional group are bonded to a silicon atom, and has a function to make the surface of the silica particles be hydrophobic. Namely, in a case of carrying out the surface treatment of the fine silica particles employing a silane coupling agent, a dealcoholization reaction takes place between the alkoxy group of the silane coupling agent and the hydroxyl group on the surface of the fine silica particles, whereby a Si-O-Si bond will be formed.

The silane coupling agent is not particularly limited and is optional so long as the above object is achieved, and particularly preferred is a trialkoxysilane having a radiation-curable functional group. Specifically, it may, for example, be epoxycyclohexylethyltrimethoxysilane, glycid oxypropyltrimethoxysilane, vinyltrimethoxysilane, vinyltriethoxysilane, acryloxypropyltrimethoxysilane, methacryloxypropyltrimethoxysilane, mercaptopropyltrimethoxysilane or mercaptopropyltriethoxysilane.

Further, the amount of the silane coupling agent to be used is optional so long as the above aggregation and white turbidity can be prevented, and it is desirably usually at least 1 wt.%, preferably at least 3 wt.%, more preferably at least 5 wt.% based on the fine silica particles. If the amount of the silane coupling agent is too small, the surface of the fine silica particles may not sufficiently be hydrophobic, and uniform mixing with a urethane oligomer may be impaired. On the other hand, if the amount is too large, the silane coupling agent which will not be bonded to the fine silica particles will be contained in the composition A in a large amount, whereby the transparency, the mechanical properties, etc. of the light transmitting layer to be obtained tend to be impaired. Accordingly, the upper limit of the amount of the silane coupling agent to be used is usually at most 400 wt.%, preferably at most 350 wt.%, more preferably at most 300 wt.%.

Further, the silane coupling agent may be partially hydrolyzed at the time of the surface treatment in some cases. Accordingly, when the fine silica particles are subjected to the surface treatment by the silane coupling agent, the composition A thus obtained may contain fine silica particles which are surface treated by a compound selected from the group consisting of the silane coupling agent, a hyrdolyzate of the silane coupling agent and a condensate thereof in some cases. Further, it may contain a condensate of the silane coupling agent and/or a condensate of the silane coupling agent with its hydrolysate in some cases.

Here, the hydrolysate of the silane coupling agent means a product wherein some of or all the alkoxysilane groups of the silane coupling agent are converted into silanol groups via the hydrolytic reaction and a part of or the entire silane coupling agent is converted into a hydroxysilane. For example, in a case where the silane coupling agent is epoxycyclohexylethyltrimethoxysilane, the hydrolysate includes epoxycyclohexylethylhydroxydimethoxysilane, epoxycyclohexylethyldihydroxymethoxysilane and epoxycyclohexylethyltrihydroxysilane.

Further, the condensate of the silane coupling agent and/or the condensate of the silane coupling agent and its hydrolysate means a product wherein the alkoxyl group undergoes a dealcoholization reaction with the silanol group to form a Si-O-Si bond, or the silanol group undergoes a dehydration reaction with another silanol group to form a Si-O-Si bond.

The above-described surface treating agent is employed in a method depending upon the type of the surface treating agent or the purpose of use, to carry out the surface treatment of the dispersive inorganic components.

For example, when the surfactant or the dispersing agent is employed as the surface treating agent, a method of mixing a liquid medium having the fine silica particles dispersed therein with the surface treating agent, followed by stirring at a temperature of from room temperature to 60°C for from 30 minutes to 2 hours for a reaction, or a method of mixing them for a reaction, followed by aging at room temperature for several days, may, for example, be mentioned. In the case of mixing, it is preferred not to select, as the liquid medium, a solvent in which the surface treating agent is very highly soluble. In a case where such a solvent in which the surface treating agent is very soluble is employed, the dispersive inorganic components may not sufficiently be protected, or the protection process requires a very long time. If such a solvent in which the surface treating agent is very highly soluble is used as the liquid medium, the dispersive inorganic components will be sufficiently protected in many cases by employing, for example, a solvent which provides a difference in solubility (SP value) between the solvent and the surface treating agent of at least 0.5.

Further, in a case where the silane coupling agent is employed as the surface treating agent for example, usually the surface treatment reaction is made to proceed at room temperature (25°C). Usually the reaction is made to proceed with stirring for from 0.5 to 24 hours, and it may be carried out under heating at a temperature of not higher than 100°C. By heating, the reaction rate tends to increase, and the reaction can be carried out in a shorter time. Further, when the silane coupling agent is employed, water may be mixed. It is preferred to mix water usually in an amount required for hydrolysis of the alkoxy groups derived from the silane coupling agent and the remaining alkoxy group derived from the alkoxysilane.

Further, the silane coupling agent may be mixed all at once, or may be mixed dividedly in two or more times. When the silane coupling agent is dividedly mixed in two or more times, water may also be dividedly mixed in two or more times, and in such a case, the amount is the same as the above-explained amount of use of water for the silane coupling agent.

Here, in a case where the surface treatment is carried out by employing the silane coupling agent, it is preferred to mix the dispersive inorganic components and the urethane oligomer after sufficient completion of the surface treatment before the dispersive inorganic components and the urethane oligomer are mixed. If the dispersive inorganic components and the urethane oligomer are mixed before sufficient progress of the surface treatment, the urethane oligomer may not uniformly be mixed, or the composition A may undergo white turbidity in the subsequent steps. Conformation whether the surface treatment employing the silane coupling agent is sufficiently completed may be carried out by measuring the amount of remaining silane coupling agent in the reaction liquid under the surface treatment. Usually, sufficient completion of the reaction in the surface treatment step can be confirmed when the amount of the remaining silane coupling agent in the reaction liquid becomes 10% or less of the charged amount.

### (3-5) Urethane oligomer

The urethane oligomer contained in the composition A is not particularly limited so long as it is an oligomer of an organic compound having a urethane bond, and an optional oligomer may be employed. Incorporation of the urethane oligomer in the composition A provides such an advantage that adhesion and the degree of surface cure of the light transmitting layer to be formed by curing the composition A tend to increase.

Such a phenomenon that the adhesion of the light transmitting layer to an adherend (usually the recording and retrieving layer) improves when the urethane oligomer is employed, is considered to be attributable to increased interaction with the adherend by electrical polarity of the urethane bond.

Further, the reason why the degree of surface cure improves when the urethane oligomer is employed is not clearly understood, but the major reason is estimated as follows. Namely, in the composition A containing the urethane oligomer in a certain amount or more, intramolecular hydrogen bonds or intermolecular hydrogen bonds due to electric polarity of the urethane bond are likely to form, whereby aggregation properties of the oligomer tend to increase, and resultingly, free movement of oxygen in the composition A is impaired, and radical polymerization inhibition is suppressed.

Further, the urethane oligomer is preferably such that the urethane oligomer itself has a radiation-curable functional group also, whereby the urethane oligomer is incorporated and united in the radiation-curable network structure. Accordingly, when the composition A is cured by irradiation with radiation, aggregation properties of the composition A tend to increase, and resultingly, the light transmitting layer is less likely to undergo cohesive failure, and the adhesion of the light transmitting layer tends to improve. Further, an effect of limiting free movement of oxygen tends to increase, whereby the degree of surface cure of the light transmitting layer tends to improve.

Further, the urethane oligomer may be produced by an optional known method, and it is produced usually by oligomerizing a monomer having a urethane bond. The method of producing the monomer having a urethane bond is optional, and production may be carried out in accordance with a known method such as a method of reacting a chloroformate with ammonia or an amine, a method of reacting an isocyanate with a hydroxyl group-containing compound, or a method of reacting urea with a hydroxyl group-containing compound.

Further, in a case where such a monomer has a reactive group, the monomer is oligomerized to obtain a urethane oligomer. Usually, a urethane oligomer can be produced by an addition reaction of a compound having two or more isocyanate groups in its molecule and a compound containing a hydroxyl group by a conventional method.

The compound having two or more isocyanate groups in its molecule may, for example, be a polyisocyanate such as tetramethylene diisocyanate, hexamethylene diisocyanate, trimethylhexamethylene diisocyanate, bis(isocyanatomethyl)cyclohexane, cyclohexane diisocyanate, bis(isocyanatocyclohexyl)methane, isophorone diisocyanate, tolylene diisocyanate, xylylene diisocyanate, diphenylmethane diisocyanate, m-phenylene diisocyanate or naphthalene diisocyanate.

Among them, it is preferred to employ bis(isocyanatomethyl)cyclohexane, cyclohexane diisocyanate, bis(isocyanatocyclohexyl)methane, isophorone diisocyanate or the like in view of favorable hue of the composition to be obtained. Further, compounds having isocyanate groups may be used alone or two or more of them may be used in an optional combination with an optional proportion.

Further, the compound containing a hydroxyl group is preferably a polyol containing two or more hydroxyl groups. Specifically, it may, for example, be an alkyl polyol or a polyether polyol which is a multimer thereof, such as ethylene glycol, propylene glycol, butylene glycol, neopentyl glycol, trimethylolpropane, pentaerythritol, sorbitol, mannitol or glycerol, or a polyester polyol prepared from such a polyol or a polyhydric alcohol with a polybasic acid, or a polyester polyol such as polycaprolactone. These compounds containing a hydroxyl group may also be used alone or two or more of them may be used in an optional combination with an optional proportion.

Further, the urethane oligomer thus obtained is desirably one containing the above polyether polyol as the compound containing a hydroxyl group. Specifically, the average content of the constituting units derived from the polyether polyol in one molecule of the urethane oligomer is desirably usually at least 20 wt.%, preferably at least 25 wt.%, more preferably at least 30 wt.%. Further, the upper limit is not particularly limited, and is desirably usually at most 90 wt.%, preferably at most 80 wt.%, more preferably at most 70 wt.%.

If the content of the polyether polyol is too low, the light transmitting layer as a cured product tends to be fragile, and the elastic coefficient of the light transmitting tends to be too high, whereby the internal stress is likely to occur, and the light transmitting layer tends to deform. On the other hand, if the content is too high, the surface hardness of the light transmitting layer as a cured product tends to decrease, and such a problem tends to arise that the light transmitting layer is easily scarred.

The addition reaction of the isocyanate compound with the hydroxyl compound may be carried out by an optional method. For example, a mixture of the hydroxyl compound with an addition reaction catalyst, specifically dibutyltin laurate is dropwise added to the isocyanate compound at a temperature of from 50°C to 90°C.

Particularly, in preparation of the urethane acrylate oligomer, it can be produced by employing a compound having both hydroxyl group and (meth)acryloyl group as a part of the compound containing a hydroxyl group. The amount of such a compound is optional, and it is usually from 30 mol.% to 70 mol.% based on all the hydroxyl group-containing compounds, and the molecular weight of the oligomer to be obtained can be controlled depending upon its proportion.

Specifically, the compound having both hydroxyl groups and (meth)acryloyl group may, for example, be hydroxylethyl (meth)acrylate, hydroxypropyl (meth)acrylate, hydroxybutyl (meth)acrylate, an addition reaction product of a glycidyl ether compound with (meth)acrylic acid or a mono(meth)acrylate of a glycol compound.

Further, by an addition reaction of one molecule of the compound having two or more isocyanate groups in its molecule with two molecules of the compound having both hydroxyl group and (meth)acryloyl group, a urethane oligomer having a (meth)acryloyl group on each terminal can be produced.

Particularly, the urethane oligomer having a (meth)acryloyl group on each terminal has such an advantage that the adhesion and the degree of surface cure of the light transmitting layer to be obtained will further improve.

Further, the urethane oligomer preferably further has an optional acidic group. By the urethane oligomer having an acidic group, such an advantage can be obtained that the improved adhesion between the adherend and the light transmitting layer will be maintained with time (i.e. after time passes). The acidic group means a functional group having acidity. The acidic group may, for example, be a sulfonic acid group, a phosphoric acid group, a carboxyl group or a neutral salt thereof with a tertiary amine compound or a metal salt thereof. Among them, a carboxyl group is most preferred. The urethane oligomer may have one acidic group or two or more acidic groups in an optional combination with an optional proportion.

In order that the urethane oligomer has an acidic group, for example, as a raw material to be used for the production of the urethane oligomer, one having a carboxyl group may be employed. Particularly, it is preferred to employ a hydroxyl group-containing compound having a carboxyl group as the raw material compound.

The hydroxyl group-containing compound having a carboxyl group is not limited and optional one may be employed. For example, a so-called acid diol containing two or more hydroxyl groups may be preferably employed. Specifically, it may, for example, be a compound having two hydroxyl groups and two carboxyl groups in one molecule such as an alkanol carboxylic acid or its caprolactone addition product such as dimethylolacetic acid, dimethylolpropionic acid, dimethylolbutanoic acid, dimethylolheptanoic acid, dimethylolnonanoic acid or dihydroxybenzoic acid; or a half ester compound of a polyoxypropylenetriol with maleic anhydride or phthalic anhydride.

Further, the molecular weight of the urethane oligomer is not limited and is optional so long as the effects of the present invention are not significantly impaired. It is desirably usually at least 500, preferably at least 1,000, more preferably at least 1,500, and usually at most 10,000, preferably at most 8,000, more preferably at most 6,000. If the molecular weight is lower than the lower limit of this range, the shrinkage on curing tends to increase, and if it is higher than the upper limit, the viscosity may significantly increase, whereby producability may deteriorate.

The urethane oligomers may be used alone or two or more of them may be used in an optional combination with an optional proportion.

### (3-6) Other components

In the composition A, another component may suitably be incorporated.

For example, a radiation-curable monomer and/or its oligomer (hereinafter suitably referred to as "radiation-curable component") may be incorporated. By employing this radiation-curable component, it is possible to make the composition A be capable of being cured by radiation and to cure the composition A by irradiation with radiation, even when the urethane oligomer is not capable of being cured by irradiation.

Further, it is preferred to employ a bifunctional or trifunctional (meth)acrylate compound among radiation-curable components.

The bifunctional or trifunctional (meth)acrylate compound may be optional, and it may, for example, be an aliphatic poly(meth)acrylate, an alicyclic poly(meth)acrylate or an aromatic poly(meth)acrylate. Specifically, it may, for example, be a bivalent (meth)acrylate such as triethylene glycol di(meth)acrylate, hexanediol di(meth)acrylate, 2,2-bis[4-(meth)aryloyloxyphenyl]propane, 2,2-bis[4-(2-(meth)acryloyloxylethoxy)phenyl]propane, bis(hydroxymethyl)tricyclo[5.2.1.0^{2,6}]decane= dimethacrylate, p-bis[β-(meth)acryloyloxyethylthio]xylylene or 4,4'-bis[β-(meth)acryloyloxyethylthio]diphenyl sulfone, a trivalent (meth)acrylate such as trimethylolpropane tris(meth)acrylate, glycerol tris(meth)acrylate or pentaerythritol tris(meth)acrylate, a tetravalent (meth)acrylate such as pentaerythritol tetrakis(meth)acrylate or an undefined multivalent (meth)acrylate such as epoxy acrylate. Among them, a bivalent (meth)acrylate is preferably employed in view of controllability of the crosslink formation reaction.

Further, a trivalent or higher valent (meth)acrylate is preferably employed for the purpose of improving heat resistance and surface hardness of the crosslinking structure of the light transmitting layer. Specifically, a trifunctional (meth)acrylate having an isocyanurate skeleton as well as the above-exemplified trimethylolpropane tris(meth)acrylate, etc. may, for example, be mentioned.

Further, a (meth)acrylate compound containing a hydroxyl group is preferably employed for the purpose of improving the bonding properties and adhesion of the light transmitting layer. Specifically, it may, for example, be hydroxyethyl (meth)acrylate.

Further, among the above-exemplified (meth)acrylates, particularly preferred is use of the following component I and the following component II with a view to realizing the transparency and a low degree of optical distortion of the light transmitting layer in a well balanced manner.

The component I is a bis(meth)acrylate having an alicyclic skeleton presented by the following formula (1) :

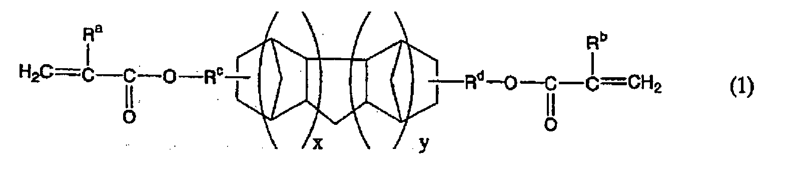

In the formula (1), each of _{R}^{a} and _{R}^{b} which are independent of each other, is a hydrogen atom or a methyl group, each of R^{c} and R^{d} which are independent of each other, is an alkylene group having at most six carbon atoms, x is 1 or 2, and y is 0 or 1.

Specifically, the component I represented by the above formula (1) may, for example, be bis(hydroxymethyl)tricyclo[5.2.1.0^{2,6}]decane=diacrylate, bis(hydroxymethyl)tricyclo[5.2.1.0^{2,6}]decane= dimethacrylate, bis(hydroxymethyl)tricyclo[5.2.1.0^{2,6}]decane=acrylate methacrylate or a mixture thereof, bis(hydroxymethyl)pentacyclo[6.5.1.1^{3,6}.0^{2,7}.0^{9,13}] pentadecane=diacrylate, bis(hydroxymethyl)pentacyclo[6.5.1.1^{3,6}0^{2,7}0^{9,13}] pentadecane=dimethacrylate, bis (hydroxymethyl)pentacyclo [6.5.1.1^{3,6}.0^{2,7}0^{9,13}] pentadecane=acrylate methacrylate or a mixture thereof. These components I may be used alone or two or more of them may be used in an optional combination with an optional proportion.

Further, the component II is a bis(meth)acrylate having a sulfur atom represented by the following formula (2) :

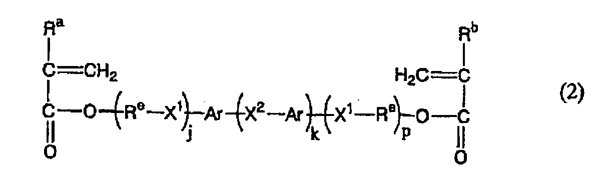

In the above formula (2), R^{a} and R^{b} are the same as R^{a} and R^{b} in the above formula (1), respectively.

Each R^{e} independently is a C₁₋₆ alkylene group.

Each Ar independently is a C₆₋₃₀ arylene group or aralkylene group. The hydrogen atoms in each Ar may be independently substituted by a halogen atom other than a fluorine atom.

Each X¹ independently is an oxygen atom or a sulfur atom.

In a case where all X¹'s are oxygen atoms, X² is a sulfur atom or a sulfone group (-SO₂-). On the other hand, at least one of X¹'s is a sulfur atom, X² is any one of a sulfur atom, a sulfone group, a carbonyl group (-CO-), and a C₁₋₁₂ alkylene, aralkylene, alkylene ether, aralkylene ether, alkylene thioether and aralkylene thioether groups.

Each of j and p which are independent of each other, is an integer of from 1 to 5, and k is an integer of from 0 to 10. In a case where k is 0, X¹ is a sulfur atom.

Specifically, the component II represented by the above formula (2) may, for example, be α,α'-bis[β-(meth)acryloyloxyethylthio]-p-xylene, α,α'-bis[β-(meth)acryloyloxyethylthio]-m-xylene, α,α'-bis[β-(meth)acryloyloxyethylthio]-2,3,5,6-tetrachloro-p-xylene, 4,4'-bis[β-(meth)acryloyloxyethoxy]diphenyl sulfide, 4,4'-bis[β-(meth)acryloyloxyethoxy]diphenyl sulfone, 4,4'-bis[β-(meth)acryloyloxyethylthio]diphenyl sulfide, 4,4'-bis[β-(meth)acryloyloxyethylthio]diphenyl sulfone, 4,4'-bis[β-(meth)acryloyloxyethylthio]diphenyl ketone, 2,4'-bis[β-(meth)acryloyloxyethylthio]diphenyl ketone, 5,5'-tetrabromodiphenyl ketone, β,β'-bis[p-(meth)acryloyloxyphenylthio]diethyl ether or β,β'-bis[p-(meth)acryloyloxyphenylthio]diethyl thioether. Such components II may be used alone or two or more of them may be used in an optional combination with an optional proportion.

Among the above-described radiation-curable components, bis(hydroxymethyl)tricyclo[5.2.1.0^{2,6}]decane= dimethacrylate has excellent transparency and heat resistance and is particularly preferably employed.

The radiation-curable components may be used alone or two or more of them may be used in an optional combination with an optional proportion.

The amount of the radiation-curable component to be used is optional so long as the effects of the present invention are not significantly impaired, and it is desirably usually at most 50 wt.%, preferably at most 30 wt.%, based on the composition excluding the above dispersive inorganic components in the composition A, i.e. components other than the dispersed silica particles, the combined inorganic component and the surface treating agent therefor.

Further, for example, a reactive diluent may be incorporated in the composition A for the purpose of adjusting the viscosity of the composition or for another purpose. The reactive diluent is a liquid compound having a low viscosity and is usually a monofunctional low molecular weight compound. The reactive diluent is not limited and an optional diluent may be employed so long as the effects of the present invention are not significantly impaired. It may, for example, be a compound having a vinyl group or a (meth)acryloyl group or a mercaptan.

However, the reactive diluent is preferably one capable of being cured by irradiation, and preferred is a compound having a vinyl group or a (meth)acryloyl group, for example. Specifically, such a compound may, for example, be an aromatic vinyl monomer, a vinyl ester monomer, a vinyl ether, a (meth)acrylamide, a (meth)acrylate or a di(meth)acrylate, and preferred is a compound having a structure with no aromatic ring in view of the hue and the light beam transmittance. Among them, particularly preferred is a (meth)acrylate having an alycylic skeleton such as (meth)acryloylmorpholine, tetrahydrofurfuryl (meth)acrylate, benzyl (meth)acrylate, cyclohexyl (meth)acrylate or a (meth)acrylate having a tricylclodecane skeleton, a (meth)acrylamide such as N,N-dimethylacrylamide, or an aliphatic (meth)acrylate such as hexanediol di(meth)acrylate or neopentylglycol di(meth)acrylate in view of favorable hue and viscosity.

Further, a compound having both hydroxyl group and (meth)acryloyl group, such as hydroxyethyl (meth)acrylate, hydroxypropyl (meth)acrylate or hydroxybutyl (meth)acrylate may also be used for the above purpose. Such a compound may improve the adhesion of the light transmitting layer to an adherend in some cases.

The reactive diluents may be used alone or two or more of them may be used in an optional combination with an optional proportion.

Further, the amount of the reactive diluent to be used is optional so long as the effects of the present invention are not significantly impaired, and it is usually at least 0.5 wt.%, preferably at least 1 wt.%, and usually at most 80 wt.%, preferably at most 50 wt.% based on the composition except for the above dispersive inorganic components in the composition A, i.e. components excluding the dispersed silica particles, the combined inorganic component and the surface treating agent therefor. If the amount is too small, the diluting effect may be small, and if the amount is too large, the light transmitting layer tends to be fragile and to have reduced mechanical strength, and the shrinkage on curing tends to be significant.

Further, it is usually preferred to incorporate a polymerization initiator in the composition A so as to initiate the polymerization reaction which proceeds by active energy rays (such as ultraviolet rays). As such a polymerization initiator, a radical generator which is a compound having characteristics to generate radicals by a light is commonly used, and the polymerization initiator is not limited and known one may optionally be employed.

The radical generator may, for example, be benzophenone, benzoin methyl ether, benzoin isopropyl ether, diethoxyacetophenone, 1-hydroxycyclohexyl phenyl ketone, 2,6-dimethylbenzoyldiphenylphosphine oxide or 2,4,6-trimethylbenzoyldiphenylphosphine oxide. Among them, preferred is 1-hydroxycyclohexyl phenyl ketone, 2,4,6-trimethylbenzoyldiphenylphosphine oxide or benzophenone.

The polymerization initiators may be used alone or two or more of them may be used in an optional combination with an optional proportion.

The amount of the polymerization initiator to be used is optional so long as the composition A can be cured, and it is usually at least 0.001 part by weight, preferably at least 0.01 part by weight, more preferably at least 0.05 part by weight per 100 parts by weight of the total amount of the monomer containing a radiation-curable functional group and/or its oligomer. Further, it is usually at most 10 parts by weight, preferably at most 8 parts by weight. If the amount is too large, not only the polymerization reaction will rapidly proceed and the optical distortion of the light transmitting layer tends to increase, but also the hue of the light transmitting layer may deteriorate in some cases. Further, if the amount is too small, the composition A may not sufficiently be cured in some cases.

In a case where the polymerization reaction is initiated by electron beams, although the above polymerization initiator may be employed, it is preferred not to use the polymerization initiator.

### (3-7) Method of forming light transmitting layer

### (3-7-1) Preparation of composition A

The light transmitting layer is formed by curing the composition A containing at least the fine silica particles and the urethane oligomer. On that occasion, the composition A is prepared first, and the method of preparing the composition A is not limited, and an optional method may be employed so long as the dispersive inorganic components can be uniformly dispersed in the above urethane oligomer. As specific examples of such a method, the following methods may be mentioned.
(1) A method of preparing a powder of the fine silica particles, applying a proper surface treatment, and then directly dispersing the powder in the urethane oligomer properly formed into a liquid state.
(2) A method of preparing the fine silica particles in the urethane oligomer properly formed into a liquid state.
(3) A method of preparing the fine silica particles in a liquid medium, dissolving the urethane oligomer in the liquid medium and then removing the solvent in the liquid medium.
(4) A method of removing the urethane oligomer in a liquid medium, preparing the fine silica particles in the liquid medium and then removing the solvent in the liquid medium.
(5) A method of preparing the fine silica particles and the urethane oligomer in a liquid medium, and then removing the solvent in the liquid medium.

Among the above methods for preparing the composition A, the method (3) is most preferred, by which a composition having high transparency and favorable storage stability is likely to be obtained.

In the above method (3), specifically, it is preferred to sequentially carry out (a) a step of hydrolyzing an oligomer of an alkoxysilane in a liquid medium such as a solvent, a surface treating agent or a diluent to prepare the fine silica particles, (b) a step of applying a surface treatment to the fine silica particles, (c) a step of mixing urethane oligomer with the fine silica particles, and (d) a step of removing the solvent. According to this production method, a radiation-curable resin composition having fine silica particles with a uniform particle size highly dispersed therein can more easily be obtained as the composition A.

Now, steps in the method (3) will be explained in further detail below.

In the step (a), an oligomer of the alkoxysilane, a catalyst and water are made to coexist in a liquid medium to carry out hydrolysis of the oligomer of an alkoxysilane to prepare the fine silica particles.

The liquid medium is not particularly limited, and preferred is one having compatibility with the urethane oligomer. Specifically, the above-described solvent, surface treating agent, diluent or the like may be employed. Among them, in the method (3), the solvent is preferably an alcohol or a ketone, particularly preferably a C₁₋₄ alcohol, acetone, methyl ethyl ketone or ethyl isobutyl ketone. Further, in the method (3), the amount of the liquid medium is preferably from 0.3 to 10 times to the oligomer of an alkoxysilane.

Further, as the catalyst, the above described catalyst may be employed. Particularly, in the method (3), a hydrolytic catalyst such as an organic acid such as formic acid or maleic acid; an inorganic acid such as hydrochloric acid, nitric acid or sulfuric acid; or a metal complex compound such as aluminum acetylacetonate, dibutyltin dilaurate or dibutyltin dioctanoate is usually used. The amount of the catalyst to be used is preferably from 0.1 to 3 wt.% based on the oligomer of an alkoxysilane.

Further, in the method (3), water is used usually in an amount of from 10 wt.% to 50 wt.% based on the oligomer of an alkoxysilane.

Then, in the step (b), a surface treatment is applied to the fine silica particles. The specific method of the surface treatment is optional, and usually it can be carried out by employing a surface treating agent in the same manner as the above-described surface treatment on the dispersive inorganic components. Accordingly, the surface treating agent may, for example, be a surfactant, a dispersing agent or a silane coupling agent.

Then, in the step (c), the urethane oligomer and the fine silica particles are mixed. As mentioned above, in a case where the surface treatment is carried out employing a silane coupling agent in the step (b), the step (c) is carried out preferably after sufficient completion of the reaction in the step (b). Whether the reaction in the step (b) is sufficiently completed can be confirmed by measuring the amount of the remaining silane coupling agent in the reaction liquid. Usually, the sufficient completion of the reaction in the step (b) can be confirmed when the amount of the remaining silane coupling agent in the reaction liquid becomes 10% or less of the charged amount.

The step (c) may be carried out at room temperature (25°C), and in a case where the urethane oligomer has a high viscosity or in a case where the melting point of the urethane oligomer is room temperature (25°C) or higher, the step (c) may be carried out with heating at from 30 to 90°C. The mixing time is usually preferably from 30 minutes to 5 hours.

Then, in the step (d), removal of mainly the solvent employed as the liquid medium and the solvent such as an alcohol formed by the hydrolysis of the alkoxysilane oligomer is carried out. The solvents are not necessarily completely removed so long as they are removed within a required range, and they are preferably removed to such an extent that substantially no solvent is contained. "Substantially no solvent is contained" means such a state that the content of so-called organic solvents having volatility or having a low boiling point is very low, and means a solvent content in the composition A of usually at most 5 wt.%, preferably at most 3 wt.%, more preferably at most 1 wt.%, furthermore preferably at most 0.1 wt.%. Briefly, it means such a state that no odor of the organic solvents is confirmed.

Otherwise, it means such a state that after the composition A is spin coated in a thickness of 100±15 µm, heated at 70°C for one minute and then irradiated with ultraviolet rays of 3J/cm² or irradiated with electron beams of 5 Mrad, or cured until an evaluation result ○ is achieved by the following method of evaluating the degree of surface cure, no bubbles nor white turbidity due to volatilization of the solvents remaining in the light transmitting layer as a cured product, is observed.

Method of evaluating the degree of surface cure: the composition A is irradiated with ultraviolet rays in a specified amount, the sample is gently pinched by the index finger and the thumb of the right hand wearing a rubber glove so that the thumb is on the coated surface side, and the thumb is released from the coated surface. An evaluation is made on the basis of standards ○: no trace of the thumb visually observed, Δ: the trace slightly observed, and ×: the trace clearly observed.

Further, when the solvents are removed, removal is carried out by drying the solvents at a temperature usually within a range of from 10°C to 75°C. If the temperature is lower than the lower limit of this range, the solvents may not sufficiently be removed. On the other hand, if it is higher than the upper limit, the composition A is likely to gelate. The temperature may be controlled stepwise.

The time for removal of the solvents is preferably from 1 to 12 hours.

As the pressure condition at the time of removal of the solvents, removal is carried out preferably under reduced pressure of at most 20 kPa, more preferably at most 10 kPa. Further, removal is carried out preferably under a pressure of at least 0.1 kPa. Further, the pressure may be gradually reduced.

The above-explained preferred preparation method has such an advantage that ultrafine particles having a smaller particle size can be dispersed without aggregation even in a large amount as compared with a method of adding a filler (such as fine silica particles) or a surface treating agent such as a silane coupling agent to a resin composition (such as the urethane oligomer) to disperse the filler. Accordingly, the composition A which is a radiation-curable resin composition to be obtained has the fine silica particles in a sufficient amount to increase the dimensional stability and the mechanical strength of the resin dispersed therein without the radiation transmittance being impaired. Further, the light transmitting layer which is a product cured by radiation to be obtained by curing it has transparency, high surface hardness and a low degree of shrinkage on curing. Preferably, it further has dimensional stability and adhesion, and more preferably it has a high degree of surface cure in addition.

### (3-7-2) Application of composition A

The composition A prepared as mentioned above is applied directly on the recording and retrieving layer or in a case where another layer is formed on the recording and retrieving layer, via said another layer, and then cured to form the light transmitting layer. The method of applying the composition A is not limited, and coating may be carried out by an optional method so long as a layer of the composition A can be formed with a predetermined thickness in accordance with the aimed thickness of the light transmitting layer.

Specifically, the coating method may, for example, be spin coating, dip coating, roll coating, bar coating, die coating or spray coating.

Further, the thickness of the layer of the composition A applied is not limited, and it is desirably usually at least 10 µm, preferably at least 50 µm, more preferably at least 80 µm, and usually at most 1 mm, preferably at most 0.5 mm, more preferably at most 0.3 µm. The thickness of the applied layer is usually substantially the same as the thickness of the light transmitting layer after curing or thicker by about 2% considering the shrinkage on curing.

Further, coating may be carried out in one time or may be dividedly carried out in two or more times, but coating in one time is economically advantageous and preferred.

### (3-7-3) Curing of composition A

The composition A applied in the form of a layer on the recording and retrieving layer is cured to form the light transmitting layer. For curing the composition A, so-called "radiation curing" to irradiate the composition A with radiation (active energy rays or electron beams) to initiate the polymerization reaction of the monomer or the oligomer in the composition A, is carried out.

Specific procedures and conditions for the radiation curing are optional so long as the composition A can be cured by the radiation curing. Accordingly, the manner of the polymerization reaction at the time of the radiation curing is not limited, and an optional known polymerization manner such as radical polymerization, anionic polymerization, cationic polymerization or coordination polymerization may be employed. Among these polymerization manners, most preferred is radical polymerization. The reason is not clearly understood, but is estimated to be due to homogeneity of the product by homogeneous progress of the initiation of the polymerization reaction in the polymerization system in a short time.

The radiation may be electromagnetic waves (such as gamma rays, X-rays, ultraviolet rays, visible light, infrared rays or microwaves) or particle beams (such as electron beams, alpha rays, neutron beams or atomic beams) which have such a function that they act on the polymerization initiator which initiates a required polymerization reaction, to generate chemical species which initiates the polymerization reaction.

As examples of the preferred radiation, ultraviolet rays, visible light and electron beams are preferred, and ultraviolet rays and electron beams are more preferred, in view of the energy and that a general purpose light source can be used.

In the case of employing ultraviolet rays, usually a method may be employed wherein a photoradical generator which generates radicals by ultraviolet rays is used as a polymerization initiator and ultraviolet rays are used as the radiation. As the photoradical generator, a known compound called a photopolymerization initiator or a photoinitiator may optionally be used. Specifically, the photoradical generator may, for example, be benzophenone, 4,4-bis(diethylamino)benzophenenone, 2,4,6-trimethylbenzophenone, methylorthobenzoyl benzoate, 4-phenylbenzophenone, thioxanthone, diethylthioxanthone, isopropylthioxanthone, chlorothioxanthone, t-butylanthraquinone, 2-ethylanthraquinone, diethoxyacetophenone, 2-hydroxy-2-methyl-1-phenylpropane-1-one, benzyl dimethyl ketal, 1-hydroxycyclohexyl phenyl ketone, benzoin methyl ether, benzoin ethyl ether, benzoin isopropyl ether, benzoin isobutyl ether, 2-methyl-1-[4-(methylthio)phenyl]-2-morpholinopropan-1-one; 2,4,6-trimethylbenzoyldiphenylphosphine oxide, bis(2,6-dimethoxylbenzoyl)-2,4,4-trimethylpentylphosphine oxide, bis(2,4,6-trimethylbenzoyl)-phenylphosphine oxide or methyl benzoylformate. Such photoradical generators may be used alone or two or more of them may be used in an optional combination with an optional proportion.

Further, in a case where the composition A is employed for e.g. an optical recording medium employing a laser having a wavelength of from 380 nm to 800 nm as a light source, it is preferred to suitably select the type and the amount of the photoradical generator so that a laser beam required for reading can sufficiently be transmitted through the light transmitting layer formed by curing the composition A. In such a case, it is particularly preferred to use a photoradical generator sensitive to short wavelength, which provides a light transmitting layer which hardly absorbs a laser beam, as the photoradical generator. Specifically, such a photoradical generator sensitive to short wavelength may, for example, be benzophenone, 2,4,6-trimethylbenzophenone, methylorthobenzoyl benzoate, 4-phenylbenzophenone, diethoxyacetophenone, 2-hydroxy-2-methyl-1-phenylpropan-1-one, benzyl dimethyl ketal, 1-hydroxycyclohexyl phenyl ketone, benzoin methyl ether, benzoin ethyl ether, benzoin isopropyl ether, benzoin isobutyl ether or methyl benzoylformate. Such photoradical generators may also be used alone or two or more of them may be used in an optional combination with an optional proportion.

In the composition A, the content of the photoradical generator is not limited and is optional so long as the effects of the present invention are not significantly impaired. It is desirably usually at least 0.001 part by weight, preferably at least 0.01 part by weight, more preferably at least 0.1 part by weight, and usually at most 10 parts by weight, preferably at most 9 parts by weight, more preferably at most 7 parts by weight per 100 parts by weight of the total amount of components excluding the dispersed silica particles, the combined inorganic component and the surface treating agent therefor in the composition A. If the content of the photoradical generator is lower than the lower limit of the above range, the mechanical properties of the composition A tend to be insufficient, and if it is more than the upper limit, the radiation curing properties of the film of the composition A tend to be poor, or the light transmitting layer may be colored, whereby reading of information utilizing light tends to be impaired.

On that occasion, a sensitizer may be used in combination as the case requires. The sensitizer is not limited and a known sensitizer may optionally be employed. Specifically, the sensitizer may, for example, be methyl 4-dimethylaminobenzoate, ethyl 4-dimethylaminobenzoate, amyl 4-dimethylaminobenzoate or 4-dimethylaminoacetophenone. Such sensitizers may be used alone or two or more of them may be used in an optional combination with an optional proportion.

Further, as the ultraviolet rays, one having a wavelength within a range of usually from 200 to 400 nm, preferably from 250 to 400 nm, may be employed. As an apparatus to apply ultraviolet rays, an optional known apparatus such as a high-pressure mercury lamp, a metal halide lamp or an ultraviolet lamp having a structure to generate ultraviolet rays by microwaves may preferably be employed. Preferred is a high-pressure mercury lamp. The output of the apparatus is usually from 10 to 200 W/cm, and the apparatus is preferably installed with a distance of from 5 to 80 cm from the object to be irradiated, whereby the degree of photo-deterioration, thermal deterioration, thermal deformation and the like of the irradiated object tends to be low.

Further, the composition A can be preferably cured also by electron beams, whereby a cured product excellent in mechanical properties particularly tensile elongation properties will be obtained. In the case of employing electron beams, although the light source and irradiation apparatus therefor tend to be expensive, their use is preferred in some cases, since it is possible to omit use of the initiator, and no polymerization inhibition by oxygen will occur, whereby favorable degree of surface cure will be obtained. The manner of an electron beam irradiation apparatus to be used for irradiation with electron beams is not limited and an optional apparatus may be employed, and a curtain type, an area beam type, a broad beam type or a pulse beam type may, for example, be mentioned. Further, the accelerating voltage at the time of irradiation with electron beams is usually preferably from 10 to 1,000 kV.

Further, the intensity of the radiation applied at the time of curing by radiation is optional so long as the composition A can be cured, and it is desired to apply the radiation with an energy of usually at least 0.1 J/cm², preferably at least 0.2 J/cm². Further, it is desired to apply the radiation with an energy within a range of usually at most 20 J/cm², preferably at most 10 J/cm², more preferably at most 5 J/cm², furthermore preferably at most 3 J/cm², particularly preferably at most 2 J/cm². The intensity of the radiation can be optionally selected within this range depending upon the type of the composition A. For example, in a case where the composition A is a radiation-curable resin composition containing a monomer having a urethane bond or a hydroxyalkylene group and/or its oligomer including a urethane oligomer, the intensity of the radiation applied is preferably at most 2 J/cm². If the energy of the radiation applied is extremely low or the application time is extremely short, the polymerization tends to be incomplete, whereby no sufficient heat resistance nor mechanical properties of the light transmitting layer may be obtained.

Further, the radiation application time is also optional so long as the composition A can be cured, and it is usually at least one second, preferably at least 10 seconds. However, if the time is extremely in excess, deterioration represented by deterioration of the hue by light such as yellowing may occur in some cases. Accordingly, the application time is usually at most 3 hours, and it is preferably at most about 1 hour in view of acceleration of the reaction and productivity.

Further, the application of radiation may be carried out in one step or may be dividedly carried out in two or more steps. As the source of radiation, usually a diffusion source of radiation from which the radiation radiates in all directions is employed.

### (3-8) Physical properties of light transmitting layer

It is usually preferred that the above formed light transmitting layer is insoluble and infusible in a solvent or the like, it has properties advantageous for an application to an optical component even if it is formed into a thick film, and it is excellent in adhesion and degree of surface cure. Specifically, it preferably has a low degree of optical distortion (low birefringence), a high light beam transmittance, dimensional stability, high adhesion, a high degree of surface cure and heat resistance at a certain level or more. Further, it preferably has a degree of shrinkage on curing as low as possible.

The physical properties will be explained in further detail below.

The thickness of the light transmitting layer is not limited and can optionally be set, and it is usually at most 5 mm, preferably at most 2 mm, more preferably at most 1 mm, furthermore preferably at most 500 µm, and it is usually at least 0.1 µm, preferably at least 1 µm, more preferably at least 10 µm, furthermore preferably at least 50 µm, particularly preferably at least 70 µm, most preferably at least 90 µm.

The transparency of the light transmitting layer is optional within a range where it is not against the scope of the present invention, and the light beam transmittance per 0.1 mm of the light path length at 550 nm is desirably usually at least 80%, preferably at least 85%, more preferably at least 89%. More preferably, the light beam transmittance per 0.1 mm of the light path length at 400 nm is usually at least 80%, preferably at least 85%, more preferably at least 89%. Particularly preferred is one having the above light beam transmittance per 1 mm of the light path length. The upper limit of the light beam transmittance is ideally 100%. The light beam transmittance may be measured, for example, by means of an ultraviolet/visible spectrophotometer model HP8453 manufactured by Hewlett-Packard Development Company, L.P. at room temperature.

Further, the surface hardness of the light transmitting layer is optional, and the surface hardness by a pencil hardness test in accordance with JIS K5400 is preferably at least 2B. Further, it is preferably at least HB, more preferably at least F, furthermore preferably at least H. Further, it is preferably at most 7H. In such a case, the light transmitting layer preferably satisfies the above hardness even if it is a cured product cured on an inorganic substrate of e.g. glass or a metal or a resin substrate. More preferably, it satisfies the above hardness even when it is a cured product cured on a plastic substrate of e.g. a polycarbonate. If the hardness is too low, the surface is likely to be scarred. A too large hardness itself is not problematic, but the light transmitting layer tends to be fragile, and cracks and pealing are likely to occur.

Further, the degree of shrinkage on curing when the composition A is cured to form the light transmitting layer is preferably as low as possible, and it is usually at most 3 vol.%, preferably at most 2 vol.%. Measurement of the shrinkage on curing is usually substituted by a method of coating a substrate with the composition A and measuring the amount of concave warp formed after the curing. As a specific measuring method, a film of the composition A with a thickness of 100±15 µm is formed on a circular polycarbonate plate having a diameter of 130 mm and a thickness of 1.2±0.2 mm by a spin coater, followed by irradiation with radiation in a specific amount, and then the polycarbonate plate is left at rest on a platen for one hour. Then, the concave warp (spring) of the polycarbonate plate caused by shrinkage on curing of the composition A is measured. The concave warp is preferably at most 1 mm, more preferably at most 0.5 mm, furthermore preferably at most 0.1 mm. The lower limit of the concave warpage is ideally 0 mm. The "concave warp" means the amount of warp from the platen as observed when the polycarbonate plate warps along with the shrinkage on curing of the composition A formed on the polycarbonate plate. To determine the "concave warp", it is possible to measure the amounts of warp at plural points on the polycarbonate plate to obtain an average of the measured values.

The degree of thermal expansion of the light transmitting layer is optional, and a smaller thermal expansion means more favorable dimensional stability and is preferred. For example, of the light transmitting layer, the coefficient of linear expansion which is one of specific indices of thermal expansion is as small as possible, and it is desirably usually at most 13×10⁻⁵/°C, preferably at most 12×10⁻⁵/°C, more preferably at most 10×10⁻⁵/°C, furthermore preferably at most 8×10⁻⁵/°C. The lower limit of the coefficient of thermal expansion is practically at a level of 2×10⁻⁵/°C. The coefficient of linear expansion may be determined, for example, in such a manner that employing a plate test specimen of 5 mmx5 mm×1 mm, by a compression method thermomechanical analyzer (TMA, model SSC/5200, manufactured by Seiko Instruments Inc.) with a load of 1 g at a temperature-increasing rate of 10°C/min, the coefficient of linear expansion is evaluated every 10°C within a range of from 40°C to 100°C, and the average is obtained as a representative value.

In addition, the adhesion of the light transmitting layer is preferably high. As a method of measuring the adhesion, for example, the composition A in an amount with which a coating film can be formed is dropped on a 10 cm square optically polished glass plate, followed by irradiation with radiation in a specific amount, and then the glass plate is left to stand at room temperature for one hour. Then, the center portion of the cured composition A is notched by a cutter knife so that the notch reaches the glass surface, and the glass plate is further left to stand at room temperature for 14 days, and an evaluation is made by whether separation at the interface between the cured product of the composition A (corresponding to the light transmitting layer) at the notched portion and the glass surface is visually observed or not. Using five samples, and an evaluation is made based on standards ⊚: no separation observed in all samples, ○: no separation observed in two or more samples, Δ: no separation observed in only one sample, and ×: separation visually observed in all samples. As the evaluation of the adhesion, preferred is ○ or ⊚, more preferably ⊚. Further, the light transmitting layer more preferably has the above adhesion on a plastic substrate of e.g. a polycarbonate, rather than an optically polished glass plate.

In addition, the degree of surface cure of the light transmitting layer is preferably hard. The degree of surface cure is determined as follows. After irradiation with ultraviolet rays in a specific amount, a sample is gently pinched with the index finger and the thumb of the right hand wearing a rubber glove so that the thumb is on the coated surface side, and the thumb is released from the coated surface. An evaluation is made on the basis of standards ○: no trace of the thumb visually observed, Δ: the trace slightly observed, and ×: the trace clearly observed. As the evaluation of the surface hardness, preferred is ○.

Further, with respect to the heat resistance of the light transmitting layer, the glass transition temperature as measured by differential scanning calorimetry (DSC), thermomechanical analysis (TMA) or dynamic viscoelasticity measurement is desirably usually at least 120°C, preferably at least 150°C, more preferably at least 170°C. However, the glass transition point is practically at most 200°C.

Further, the light transmitting layer is preferably insoluble in various solvents. Typically, it is preferably insoluble in a solvent such as toluene, chloroform, acetone or tetrahydrofuran.

### (4) Stainproof layer

The stainproof layer is a layer to be formed on the light transmitting layer so as to prevent the optical recording medium from being stained. Further, the stainproof layer preferably has stainproof properties and lubricity i.e. water repellency and oil repellency. Therefore, in the optical recording medium of the present invention, the stainproof layer is formed to contain the component B. The component B is an alkoxysilane compound containing a fluorine atom (hereinafter suitably referred to as "fluorine-containing alkoxysilane compound") and/or a hydrolysate of the fluorine-containing alkoxysilane compound.

### (4-1) Component B

As mentioned above, the component B is a fluorine-containing alkoxysilane compound and/or a hydrolysate of the fluorine-containing alkoxysilane compound.

The fluorine-containing alkoxysilane compound is not particularly limited and optional known one may be employed. It may, for example, be a silane coupling agent containing a fluoroalkyl group or a fluoroaryl group.

Among silane coupling agents having a fluoroalkyl group, preferred is a C₃₋₁₂ alkoxysilane having a fluoroalkyl group. Specifically, it may, for example, be (3,3,3-trifluoropropyl)triethoxysilane, (tridecafluro-1,1,2,2-tetrahydrooctyl)triethoxysilane, (peptadecafluoro-1,1,2,2-tetrahydrodecyl)triethoxysilane, (henicosafluoro-1,1,2,2-tetrahydrodecyl)triethoxysilane, or a multimer of such a compound, or a modified product obtained by condensing such a compound with another alkoxysilane compound and/or a hydroxyl group-containing compound.

Further, among silane coupling agents having a fluoroaryl group, preferred is a C₆₋₉ alkoxysilane having a fluoroaryl group. Specifically, it may, for example, be pentafluorophenyltriethoxysilane, (pentafluorophenyl)propyltriethoxysilane, a multimer of such a compound or a modified product obtained by condensing such a compound with another alkoxysilane compound and/or a hydroxyl group-containing compound.

As commercial products, OPTOOL DSX (manufactured by DAIKIN INDUSTRIES, Ltd.), FluoroSurf series FS-1000, series FS-2000, series FG-3000, series FG-4000 and series FG-5000 (manufactured by Fluoro Technology) and Novec EGC-1720 (manufactured by Sumitomo 3M Limited) may, for example, be mentioned. Among them, OPTOOL DSX, FluoroSurf FG-5010 among series FG-5000 and Novec EGC-1720 are preferred, and Novec EGC-1720 is most preferred.

Such fluorine-containing alkoxysilane compounds may be used alone or two or more of them may be used in an optional combination with an optional proportion.

Further, as the component B, a hydrolysate of the fluorine-containing alkoxysilane compound may be used instead of the fluorine-containing alkoxysilane compound or together with the fluorine-containing alkoxysilane compound. Usually, a hydroxyl group forms from the fluorine-containing alkoxysilane compound by a hydrolytic reaction with water. This hydroxyl group has high reactivity in many cases, and accordingly it is possible to increase the adhesion of the stainproof layer employing the above hydrolysate to the light transmitting layer.

Water required for the hydrolytic reaction of the fluorine-containing alkoxysilane compound is not limited, and it may be usual running water, pure water or ion exchanged water, or may be water mixed with a water composition such as a hydrated compound or may be water in the air. In a case where the hydrolysis is carried out employing water in the air, the hydrolytic reaction will moderately proceed.

Further, for the hydrolysis for the fluorine-containing alkoxysilane compound, a catalyst may be employed. The catalyst to be employed for the hydrolysis is not limited and optional one may be employed. It may, for example, be a catalytic component such as a metal chelate compound, an organic acid, a metal alkoxide or a boron compound. Such catalytic components may be used alone or two or more of them may be used in an optional combination with an optional proportion. Further, such a catalytic component may be made to coexist with the fluorine-containing alkoxysilane compound immediately before the hydrolysis, or may be made to preliminarily coexist with the fluorine-containing alkoxysilane compound together with a small amount of water so that a desired hydrolytic reaction will proceed.

The amount of such a catalytic component to be used is not particularly limited and is optional within a range where its effect can sufficiently be obtained. It is desired to employ the catalytic component in an amount of usually at least 0.1 part by weight, preferably at least 0.5 part by weight per 100 parts by weight of the alkoxysilane oligomer. However, the effect will no longer improve even when a too large amount is used, and thus its amount is desirably usually at most 10 parts by weight, preferably at most 5 parts by weight.

Further, in the stainproof layer, an optional additive may be incorporated in addition to the above component B and the solvent. The additive to be used together with the component B is not limited and is optional within a range where the effects of the present invention will not significantly be impaired. For example, another compound containing a fluorine atom or a silicone compound may be employed.

Before the stainproof layer is formed, the component B and the additive suitably used as the case requires are in a state of a composition dissolved or dispersed in the solvent (hereinafter suitably referred to as "coating composition"), because usually a coating method is employed for formation of the stainproof layer.

The solvent to be used for the coating composition is not limited and is optional so long as the effects of the present invention are not significantly impaired. Usually a halogen organic solvent is preferred, and a fluorine solvent is particularly preferred. Specific preferred commercially available solvents include Fluorinert FC-87, Fluorinert FC-72, Fluorinert FC-84, Fluorinert FC-77, Fluorinert FC-3283, Fluorinert FC-40, Fluorinert FC-43, Fluorinert FC-70, HFE-7100 and HFE-7200 (manufactured by Sumitomo 3M Limited), ASAHIKLIN AK-225, ASAHIKLIN AK-225AES, ASAHIKLIN AE-3000, ASAHIKLIN AE-3100E, Clin Dry and Clin Dry α (manufactured by Asahi Glass Company, Limited). Among them, Fluorinate FC-3283 and Fluorinate FC-40 are most preferred in view of appropriate evaporation rate with a boiling point within a range of from 80 to 170°C and favorable coating spreadablility.

Further, the compositions of the component B and the coating composition are also optional within a range where the effects of the present invention are not significantly impaired.

However, the proportion by weight of the solid component in the coating composition i.e. the fluorine-containing alkoxysilane compound and/or its hydrolysate and a solid additive to be suitably employed, is usually at least 0.01 wt.%, preferably at least 0.05 wt.%, more preferably at least 0.07 wt.% and usually at most 1 wt.%, preferably at most 0.5 wt.%, more preferably 0.2 wt.%. If the proportion is lower than the lower limit of this range, the stainproof layer may be separated, whereby the stainproof properties significantly decrease, and if it is above the upper range, the coating properties may significantly decrease, or the economical efficiency may decrease since a higher effect will no longer be obtained even at a proper concentration or above.

### (4-2) Formation of stainproof layer

The method for forming the stainproof layer is not limited, and an optional method may be employed so long as a layer containing the fluorine-containing alkoxysilane compound and/or its hydrolysate can be formed. For example, a stainproof layer containing the component B can be formed by preparing a coating composition containing the component B and the solvent and the additive to be suitably employed, and applying the coating composition to the above-described light transmitting layer directly or in a case where another layer is formed on the light transmitting layer, via said another layer, and drying the solvent.

When the coating composition is applied, the coating method is not limited, and an optional known method such as spin coating, dip coating or spray coating may be employed.

Further, the drying method is also optional. For example, drying by heating at a temperature of from 30°C to 100°C may be carried out, or drying may be carried out at room temperature. Further, for example, the drying time is preferably one day, more preferably three days. Sufficient drying makes it possible to improve stainproof properties and adhesion to the light transmitting layer. (4-3) Physical properties of stainproof layer

The stainproof layer formed to contain the component B is excellent in stainproof properties and adhesion and it can thereby prevent the optical recording medium of the present invention from being stained. Further, when the stainproof layer is formed on the above light transmitting layer, the adhesion of the stainproof layer to the light transmitting layer can be increased very high.

The stainproof properties can be quantitatively evaluated by means of pure water contact angle or hexadecane contact angle.

The pure-water contact angle of the stainproof layer is usually at least 85°, preferably at least 95°, more preferably at least 100°. On the other hand, the upper limit of the pure water contact angle is practically 150°.

Further, the hexadecane contact angle of the stainproof layer is usually at least 40°, preferably at least 50°, more preferably at least 60°. On the other hand, the upper limit of the hexadecane contact angle is practically 150°.

Further, as one index of the stainproof properties, it is preferred that a fingerprint hardly attaches to the above stainproof layer and the fingerprint is invisible. Quantitatively, such an evaluation can be made that a fingerprint hardly attaches and is invisible, for example, when the sebum on the nose is taken on the thumb, the thumb is pressed on the surface of the stainproof layer, and the fingerprint is observed by an optical microscope, whereupon the grease spot to be observed is preferably at most 30 µm, more preferably at most 10 µm. It is ideal that the grease spot is 0 µm, that is, no grease spot is observed.

On the other hand, the adhesion of the stainproof layer can be evaluated by examination of repellency using a felt-tip pen. Specifically, an evaluation can be made by means of a felt-tip pen writing test. For example, writing is carried out on the surface of the stainproof layer employing a felt-tip pen (PIN-03A manufactured by MITSUBISHI PENCIL COMPANY LIMITED) with a usual strength (0.05 MPa to 0.1 MPa), and the stainproof layer can be considered to have favorable adhesion when it repels the ink of the felt-tip pen. If it has poor adhesion, when writing by a felt-tip pen is carried out, the stainproof layer will peel off due to the shear stress, and the ink of the felt-tip pen will not be repelled.

Further, the thickness of the stainproof layer is not limited and is optional within a range where the effects of the present invention are not significantly impaired. It is usually at least 5 nm, preferably at least 10 nm, and usually at most 1,000 nm, preferably at most 100 nm, more preferably at most 50 nm. If the thickness is lower than the lower limit of this range, uneven stainproof properties may be obtained, and if it is above the upper limit, the stainproof layer tends to peel off.

Further, the stainproof layer preferably has a high transmittance of a light to be employed for recording and retrieving on the optical recording medium of the present invention. For example, the transmittance of a light having a wavelength of 550 nm is desirably usually at least 85%, preferably at least 89%. The upper limit of the transmittance is ideally 100%.

Further, the stainproof layer usually contains a solvent employed at the time of formation of the stainproof layer. Usually, the solvent contained in the coating composition cannot completely be removed even by drying and remains in the stainproof layer. Accordingly, for example, when a halogen organic solvent is employed as the solvent of the coating composition, the stainproof layer will also contain the halogen organic solvent.

However, the proportion of the organic solvent in the stainproof layer is usually preferably as small as possible, and specifically, the proportion by weight of the solvent in the stainproof layer is desirably usually at most 30 wt.%, preferably at most 10 wt.%, more preferably at most 5 wt.%. The lower limit of the proportion of the organic solvent is practically 100 ppm. ppm represents a proportion based on the weight.

### (5) Other layers

The optical recording medium of the present invention may further have another layer. The position of such a layer provided is optional, and it can be formed at a proper position depending upon the type, the purpose of use and the application of the optical recording medium.

However, the above stainproof layer is preferably an outermost layer of the optical recording medium, so as to securely prevent stains.

Further, the light transmitting layer is preferably formed directly on the recording and retrieving layer, and the stainproof layer is preferably formed directly on the light transmitting layer, so as to increase the adhesion between the respective layers.

The total thickness of the light transmitting layer and the stainproof layer is considered to be at a level of 100 µm in the case of a so-called blu-ray disc. It is preferred to adjust the thickness to be 100 µm with a margin of 10 µm considering the refractive indices of such layers. Further, the thickness of the light transmitting layer is preferably at least 80%, more preferably at least 90% of the total thickness. On the other hand, the thickness of the stainproof layer is preferably at least 0.1%, more preferably at least 1% of the total thickness. The thickness of the stainproof layer is usually at most 20%, preferably less than 20%, more preferably at most 10%, particularly preferably less than 10% of the total thickness.

### (6) Effects and the like

The optical recording medium of the present invention constituted as mentioned above has sufficient stainproof properties, since on an optical recording medium having a substrate and a recording and retrieving layer, a light transmitting layer formed by curing a component A i.e. a composition A containing silica particles and an oligomer having a urethane bond and capable of being cured by irradiation with radiation, and a stainproof layer containing a component B i.e. an alkoxysilane compound containing a fluorine atom and/or a hydrolysate of the alkoxysilane compound. Further, since the light transmitting layer can be produced by applying the composition A and curing it by irradiation with radiation, production of the optical recording medium is easily carried out, and the adhesion of the light transmitting layer to e.g. the recording and retrieving layer can be increased.

Now, advantages of the present invention in comparison with prior art will be explained in detail below.

For example, a conventional protective layer as proposed in Patent Document 2 has no sufficient stainproof properties. Further, even when a fluorine compound is added to the composition as disclosed in Patent Document 2, no sufficient stainproof properties can be imparted to the optical recording medium. However, the optical recording medium of the present invention has sufficient stainproof properties.

Further, in technique as disclosed in Patent Document 1, the layer formed on the surface of the optical recording medium has a three-layer structure, and such leads to a high cost, poor producability and thus poor practicability. However, the optical recording medium of the present invention can be produced by a simple and industrially advantageous process since functions such as stainproof properties, achieved by the three-layer structure in Patent Document 1, can be achieved by two layers of the light transmitting layer and the stainproof layer.

Further, in the optical recording medium of the present invention, the light transmitting layer is formed by curing by radiation employing a urethane oligomer, whereby adhesion between the light transmitting layer and the recording and retrieving layer or the like can be improved.

Further, in a case where dispersive inorganic components are not dispersed in the light transmitting layer (top layer in Patent Document 1) as in a conventional case, the adhesion between the light transmitting layer and the stainproof layer containing an inorganic component may be low, but in a case where the stainproof layer of the optical recording medium of the present invention is directly formed on the surface of the light transmitting layer, the adhesion between the stainproof layer and the light transmitting layer can be improved.

Further, cracks or warp occurs if the light transmitting layer (such as the anchor layer in Patent Document 1) is made thick as in a conventional case, but in the optical recording medium of the present invention, the light transmitting layer is formed by using a urethane oligomer and dispersive inorganic components in combination, whereby it is possible to suppress occurrence of cracks or warp as observed in conventional products.

### EXAMPLES

Now, the present invention will be explained in further detail with reference to Examples. However, the present invention is not limited to the following Examples, and optional modifications are possible within a range not to depart from the scope of the present invention.

### EVALUATION METHOD

### TEST ON STAINPROOF PROPERTIES

Evaluated based on the pure water contact angle and the hexadecane contact angle employing a contact angle meter (model CA-DT, manufactured by Kyowa Interface Science Co., Ltd.).

### TEST ON ADHESION

Employing a felt-tip pen (PIN-03A manufactured by MITSUBISHI PENCIL COMPANY LIMITED), a straight line with a length of 2 cm was drawn on the surface of the stainproof layer with a strength of 0.05 MPa freehand. Evaluation was made on the basis of standards ○: the ink of the felt-tip pen repelled, and ×: the ink of the felt-tip pen not repelled.

### PREPARATION

### (a) Preparation of tetramethoxysilane oligomer

1,170 g of tetramethoxysilane as an alkoxysilane and 370 g of methanol were mixed, and 111 g of 0.05% hydrochloric acid was added to carry out a hydrolytic reaction at 65°C for 2 hours.

Then, the temperature in the system was increased to 130°C, and the formed methanol was removed, and then the temperature was gradually increased to 150°C while blowing a nitrogen gas, and such a state was kept for 3 hours to remove the tetramethoxysilane monomer thereby to obtain an oligomer of tetramethoxysilane.

### (b) Preparation of silica sol

To 122.7 g of the oligomer of tetramethoxysilane obtained in the above step (a), 225.3 g of methanol was added, followed by uniform stirring, and then 24.6 g of a 5% methanol solution of aluminum acetylacetonate was added, followed by stirring for 30 minutes. To this solution, 26.0 g of demineralized water was gradually dropwise added with stirring, and stirring was continued as it was at 60°C for 2 hours to let fine silica particles grow.

Then, 119.6 g of acryloxypropyltrimethoxysilane as a silane coupling agent (surface treating agent) and 4.0 parts of maleic acid were added, followed by aging with stirring at 60°C for 2 hours. Then, 53.5 g of demineralized water and 119.6 g of acryloxypropyltrimethoxysilane were gradually added, followed by stirring at 60°C for 4 hours so that the silane coupling agent was reacted to the surface of the fine silica particles to carry out a surface treatment, thereby to prepare a silica sol.

### (c) Synthesis of urethane acrylate oligomer

Into a 2 L four-necked flask, 222.3 g of isophorone diisocyanate and 0.06 g of dibutyltin laurate were put, heated to from 70 to 80°C in an oil bath and calmly stirred until the temperature became constant. After the temperature became constant, a mixture of 29.6 g of dimethylolbutanoic acid and 255.0 g of polytetramethylene glycol was dropwise added from a dropping funnel, followed by stirring for 2 hours while keeping the temperature at 80°C. After the temperature was decreased to 70°C, a mixture of 145.0 g of hydroxyethyl acrylate and 0.3 g of methoquinone was dropwise added from a dropping funnel, and after completion of the dropwise addition, stirring was carried out for 10 hours while keeping the temperature at 80°C to synthesize a urethane acrylate oligomer as a urethane oligomer. Immediately after the synthesis, 217.4 g of isobornyl acrylate was added, followed by stirring to prepare a urethane resin composition.

### (d) Preparation of silica-containing composition (component A) for light transmitting layer

Into a 500 cc round bottom flask, 79.7 g of the silica sol prepared in the step (b), 53.2 g of the urethane resin composition prepared in the step (c), and as radiation-curable components, 10.6 g (10 wt.% of the total resin components) of polypropylene glycol diacrylate (APG 400, manufactured by SHIN-NAKAMURA CHEMICAL CO., LTD, molecular weight: about 500), 31.9 g of isobornyl acrylate and 10.6 g of hydroxyethyl acrylate, and as photoradical generators, 2.5 g of 1-hydroxycyclohexyl phenyl ketone and 2.5 g of benzophenone were added, followed by stirring at room temperature for 2 hours to obtain a transparent radiation-curable resin composition. Further, this radiation-curable resin composition was subjected to evaporation under reduced pressure at 50°C for 1 hour to remove low-boiling components contained in the radiation-curable resin composition thereby to prepare a silica-containing composition for light transmitting layer as the component A.

### (e) Preparation of composition containing no silica for formation of light transmitting layer

53.2 g of the urethane resin composition prepared in the above step (c), as radiation-curable components, 10.6 g (10 wt.% of the total resin components) of polypropylene glycol diacrylate (APG400, manufactured by SHIN-NAKAMURA CHEMICAL CO., LTD, molecular weight: about 500), 31.9 g of isobornyl acrylate and 10.6 g of hydroxyethyl acrylate, and as photoradical generators, 2.5 g of 1-hydroxycyclohexyl phenyl ketone and 2.5 g of benzophenone were added, followed by stirring at room temperature for 2 hours to prepare a composition containing no silica for light transmitting layer.

### (f) Preparation of composition α for stainproof layer

Novec EGC-1720 (manufactured by Sumitomo 3M Limited, solid component concentration: 0.1 wt.%) was employed as a composition α for stainproof layer. The solid component in Novec EGC-1720 corresponds to the component B.

### (g) Preparation of composition β for stainproof layer

Into a flask, 0.5 g of OPTOOL DSX (manufactured by DAIKIN INDUSTRIES, Ltd., solid component concentration: 20 wt.%) and 10 g of FC-3283 (manufactured by Sumitomo 3M Limited) as a solvent were weighted, followed by stirring by a magnetic stirrer at room temperature for 30 minutes to prepare a composition β (solid component: 0.1 wt.%) for stainproof layer. The solid component in OPTOOL DSX corresponds to the component B.

### EXAMPLE 1

To a circular polycarbonate substrate having a diameter of 130 mm and a thickness of 1.2 mm, the silica-containing composition (component A) for light transmitting layer prepared in the step (d) was applied in a thickness of 100±15 µm by a spin coater, and irradiated with ultraviolet rays (irradiation intensity: 1 J/cm²) for 15 seconds by a high-pressure mercury lamp with an output of 80 W/cm located at a position with a distance of 15 cm from the film of the composition to cure the composition, thereby to form a light transmitting layer.

The substrate was left to stand at room temperature for one hour, and then the composition α for stainproof layer (coating composition containing the component B) prepared in the step (f) was applied to the substrate by a spin coater at 1,000 revolutions for 10 seconds, and the substrate was left to stand as it was at room temperature for 3 days for drying, thereby to form a stainproof layer, and a laminate in the form of an optical recording medium was prepared.

With respect to the stainproof layer of the obtained laminate in the form of an optical recording medium, the test on stainproof properties and the test on adhesion were carried out. The results are shown in Table 1.

### EXAMPLE 2

A laminate in the form of an optical recording medium was prepared in the same manner as in Example 1 except that the composition β for the stainproof layer (coating composition containing the component B) prepared in the step (g) was employed instead of the composition α for stainproof layer.

With respect to the stainproof layer of the obtained laminate in the form of an optical recording medium, the test on stainproof properties and the test on adhesion were carried out. The results are shown in Table 1.

### COMPARATIVE EXAMPLE 1

A laminate in the form of an optical recording medium was prepared in the same manner as in Example 1 except that the composition containing no silica for light transmitting layer prepared in the step (e) was employed instead of the silica-containing composition for light transmitting layer.

With respect to the stainproof layer of the obtained laminate in the form of an optical recording medium, the test on stainproof properties and the test on adhesion were carried out. The results are shown in Table 1.

### COMPARATIVE EXAMPLE 2

A laminate in the form of an optical recording medium was prepared in the same manner as in Example 1 except that no stainproof layer was formed.

With respect to the stainproof layer of the obtained laminate in the form of an optical recording medium, the test on stainproof properties and the test on adhesion were carried out. The results are shown in Table 1.

**TABLE 1**

| | Stainproof properties | | Adhesion |
|---|---|---|---|
| | Pure water contact angle (°) | Hexadecane contact angle (°) | |
| Example 1 | 105 | 65 | ○ |
| Example 2 | 109 | 61 | ○ |
| Comparative Example 1 | 105 | 64 | × |
| Comparative Example 2 | 80 | 30 | - |

When Examples 1 and 2 are compared with Comparative Example 2, it is found that the laminates in the form of an optical recording medium of Examples 1 and 2 are much excellent in stainproof properties as compared with the laminate of Comparative Example 2. Accordingly, it is confirmed that a laminate in the form of an optical recording medium having a light transmitting layer formed by curing the composition A and a stainproof layer containing the component B is excellent in stainproof properties.

Further, when Examples 1 and 2 are compared with Comparative Example 1, it is found that the laminates in the form of an optical recording medium of Examples 1 and 2 are excellent in adhesion of the stainproof layer as compared with the laminate of Comparative Example 1. Accordingly, it is confirmed that a laminate in the form of an optical recording medium having a light transmitting layer formed by curing the composition A and a stainproof layer containing the component B is excellent in adhesion of the stainproof layer to the light transmitting layer.

### INDUSTRIAL APPLICABILITY

The present invention is widely applicable to optional fields of optical recording media. Particularly, it is very suitably used for CD, CD-R, CD-RW, DVD, optical recording media suitable for a blue laser, etc.

The present invention has been described in detail with reference to specific embodiments, but it is obvious for the person skilled in the art that various changes and modifications are possible without departing from the intention and the scope of the present invention.

The present invention is based on Japanese Patent Application filed on November 11, 2004 (JP-2004-327999), and the entire disclosure thereof including specification, claims, and summary are incorporated herein by reference in its entirety.

## Claims

1. An optical recording medium, which comprises a substrate, a recording and retrieving layer formed on the substrate, a light transmitting layer formed by curing the following component A, formed on the recording and retrieving layer, and a stainproof layer containing the following component B, formed on the light transmitting layer:
component A: a composition containing silica particles and an oligomer having a urethane bond, capable of being cured by irradiation with radiation,
component B: an alkoxysilane compound containing a fluorine atom and/or a hydrolysate of the alkoxysilane compound.

2. The optical recording medium according to Claim 1, wherein the silica particles contained in the component A are colloidal silica, or silica particles of a hydrolysate of an oligomer of an alkoxysilane.

3. The optical recording medium according to Claim 1, wherein the silica particles contained in the component A have a number-average particle size of at least 0.5 nm and at most 50 nm.

4. The optical recording medium according to Claim 1, wherein the silica particles contained in the component A are surface treated by a silane coupling agent.

5. The optical recording medium according to Claim 1, wherein the alkoxysilane compound containing a fluorine atom contained in the component B is a silane coupling agent containing a fluoroalkyl group or a fluoroaryl group.

6. A process for producing the optical recording medium as defined in any one of Claims 1 to 5, which comprises a step of curing the component A on the recording and retrieving layer to form the light transmitting layer, and a step of applying a composition containing the component B and a solvent and having a solid component in an amount of at least 0.01 wt.% and at most 1 wt.% to the light transmitting layer and drying the composition to form the stainproof layer.

7. The process for producing the optical recording medium according to Claim 6, wherein in the step of forming the light transmitting layer, the silica particles are prepared in a liquid medium containing a solvent, the oligomer having a urethane bond is dissolved in the liquid medium, and the solvent in the liquid medium is removed to prepare the component A.

8. The process for producing the optical recording medium according to Claim 6, wherein the solid component includes the alkoxysilane compound containing a fluorine atom and/or the hydrolysate of the alkoxysilane compound.

9. The process for producing the optical recording medium according to Claim 6, wherein the solvent is a halogen organic solvent.
